(19) **Europäisches Patentamt**
**European Patent Office**
**Office européen des brevets**

(11) **EP 3 560 214 B1**

(12) **EUROPÄISCHE PATENTSCHRIFT**

(45) Veröffentlichungstag und Bekanntmachung des Hinweises auf die Patenterteilung:
**12.11.2025 Patentblatt 2025/46**

(21) Anmeldenummer: **18704460.7**

(22) Anmeldetag: **30.01.2018**

(51) Internationale Patentklassifikation (IPC):
*H04Q 9/00* *(2006.01)* *G01D 1/00* *(2006.01)*
*G05B 23/02* *(2006.01)* *G06F 17/18* *(2006.01)*

(52) Gemeinsame Patentklassifikation (CPC):
**H04Q 9/00; G05B 23/0221**

(86) Internationale Anmeldenummer:
**PCT/EP2018/052189**

(87) Internationale Veröffentlichungsnummer:
**WO 2018/141702 (09.08.2018 Gazette 2018/32)**

(54) **VERFAHREN ZUM BEREITSTELLEN VON MESSWERTEN EINER TECHNISCHEN ANLAGE, TECHNISCHES SYSTEM UND VERFAHREN ZUM BETREIBEN DES TECHNISCHEN SYSTEMS**

METHOD FOR PROVIDING MEASURED VALUES FOR A TECHNICAL INSTALLATION, TECHNICAL SYSTEM AND METHOD FOR OPERATING THE TECHNICAL SYSTEM

PROCÉDÉ POUR FOURNIR DES VALEURS DE MESURE D'UNE INSTALLATION TECHNIQUE, SYSTÈME TECHNIQUE ET PROCÉDÉ POUR FAIRE FONCTIONNER CE SYSTÈME TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2017 DE 102017201548**

(43) Veröffentlichungstag der Anmeldung:
**30.10.2019 Patentblatt 2019/44**

(73) Patentinhaber: **Siemens Energy Global GmbH & Co. KG**
**81739 München (DE)**

(72) Erfinder:
• **GATTA, Nicolò**
**48121 Porto Fuori (RA) (IT)**

• **VENTURINI, Mauro**
**45100 Rovigo (RO) (IT)**
• **CESCHINI, Giuseppe Fabio**
**50133 Firenze (IT)**
• **FISHKIN, Alexey**
**81827 München (DE)**
• **HUBAUER, Thomas**
**85748 Garching bei München (DE)**
• **MURARASU, Alin**
**81825 München (DE)**
• **ROSHCHIN, Mikhail**
**81925 München (DE)**

(56) Entgegenhaltungen:
EP-A1- 2 290 371      EP-A1- 2 351 996
DE-A1- 10 141 556      US-A1- 2015 233 730
US-A1- 2017 017 560

**Beschreibung**

Die vorliegende Erfindung betrifft ein Verfahren zum Bereitstellen von Messwerten einer technischen Anlage, ein technisches System mit der technischen Anlage, mindestens einem Messsensor und einer programmgesteuerten Einrichtung sowie ein Verfahren zum Betreiben eines technischen Systems.

Technische Anlagen, wie beispielsweise Gas- oder Windturbinen in Kraftwerken, weisen eine zunehmende Komplexität auf. Für einen wartungsarmen und effizienten Betrieb solcher Anlagen werden daher technische Systeme zur Überwachung und Steuerung benutzt, bei denen Messsensoren Messwerte der technischen Anlage messen, in Abhängigkeit der Messwerte der Betriebszustand des technischen Systems aus technischer Anlage und Messsensoren beurteilt wird und abhängig von dieser Beurteilung Betriebsparameter der technischen Anlage verändert werden. Zum Beispiel kann anhand der Messwerte der unter Kosten-Nutzen-Aspekten optimale Zeitpunkt zum Deaktivieren der technischen Anlage zu Wartungszwecken bestimmt und die technische Anlage zu dem bestimmten optimalen Zeitpunkt deaktiviert werden.

Die Beurteilung des Betriebszustands des technischen Systems kann manuell durch einen Bediener der technischen Anlage oder automatisch in einem durch eine programmgesteuerte Einrichtung durchgeführten Verfahren erfolgen.

Beispielsweise offenbart die US 2015/233730 A1 ein Verfahren zum Zusammenführen von Messungen eines Flugparameters eines Flugzeugs aus Messungen dieses Parameters, die jeweils von einer Vielzahl von Sensoren geliefert werden.

Technische Anlagen, wie beispielsweise Gas- oder Windturbinen, können sich durch extreme Bedingungen wie hohe Temperaturen, Drücke oder Durchflussraten auszeichnen, die zu erhöhten Fehlerraten der eingesetzten Messsensoren führen. Unzuverlässige, fehlerhafte oder anderweitig anomale Messwerte können jedoch die Zuverlässigkeit einer Beurteilung des Betriebszustands der technischen Anlage in Abhängigkeit der Messwerte verringern, was einen nachteiligen Einfluss auf den Betrieb durch Verändern der Betriebsparameter der technischen Anlage haben kann.

Die EP 2 290 371 A1 offenbart ein Kalibrationsverfahren zum prospektiven Kalibrieren eines Messgeräts. Ein jeweiliger Kalibrierungspunkt umfasst ein Messignal des Messgeräts und einen Referenzwert der einer Referenzmessung entspricht. Mehrere mögliche Steigungen zwischen den Messpunkten werden bestimmt. Zur Vermeidung von Fehlkalibrationen können Steigungen außerhalb eines durch die Schwellen vorgegebenen Bereichs verworfen werden.

Die EP 2 351 996 A1 offenbart ein Verfahren zur Ermittlung mindestens einer Kenngröße für die Korrektur von Messwerten eines Coriolis-Massendurchflussmessgeräts. Das Verfahren umfasst Erfassen von Werten einer Messgröße, Berechnen mindestens eines Lageparameters aus den erfassten Werten, und Berechnen mindestens eines Streuungsparameters aus den erfassten Werten und dem Lageparameter. Die genannten Schritte werden wiederholt, bis der Streuungsparameter einen Schwellwert erreicht. Dann werden die Messwerte anhand des zu dem Streuungsparameter korrespondierenden Lageparameters korrigiert.

Vor diesem Hintergrund liegt der vorliegenden Erfindung als Aufgabe zugrunde, ein Verfahren zum Bereitstellen von Messwerten einer technischen Anlage vorzuschlagen, das die Zuverlässigkeit der von dem Verfahren bereitgestellten Messwerte verbessert.

Die Aufgabe wird durch ein Verfahren nach den unabhängigen Ansprüchen gelöst.

Insbesondere wird ein Verfahren zum Bereitstellen von Messwerten einer technischen Anlage mittels einer programmgesteuerten Einrichtung zum Durchführen des Verfahrens vorgeschlagen, bei dem Messwerte mindestens einer Messreihe erfasst werden, wobei ein jeweiliger Messwert von einem Messsensor für eine jeweilige physikalische Messgröße in einer technischen Anlage für einen jeweiligen Messzeitpunkt bereitgestellt ist. Die Messwerte werden mit Hilfe eines Schwellwertvergleichs und mindestens einer weiteren Verfahrensstufe als normale oder anomale Messwerte kategorisiert. Die weitere Verfahrensstufe umfasst dabei ein Berechnen mehrerer statistischer Lageparameter für ausgewählte Messwerte aus einer der mindestens einen Messreihe und/oder mindestens eines statistischen Lageparameters für ausgewählte Messwerte aus mehreren Messreihen.

Der Begriff "Lageparameter" bezeichnet vorliegend einen statistischen Parameter, der die Lage wie beispielsweise den Mittelpunkt einer mehrere Messwerte umfassenden Verteilung genauer beschreibt. Man kann von einer "Lage" bezüglich einer Messwertwolke sprechen.

Unter einem anomalen Messwert, der auch als unzuverlässiger Messwert oder Ausreißer bezeichnet werden kann, ist insbesondere ein Messwert zu verstehen, von dem angenommen wird, dass er aufgrund einer vorübergehenden oder dauerhaften Anomalie, Fehlfunktion oder eines Ausfalls eines Messsensors nicht auf eine zur Beurteilung des Betriebszustands der technischen Anlage nützliche Weise mit dem tatsächlichen Wert der zugehörigen physikalischen Messgröße zum Messzeitpunkt in Beziehung steht.

Bei der physikalischen Messgröße kann es sich beispielsweise um eine Temperatur, eine Bewegung, eine Vibration, einen Druck oder dergleichen handeln.

Bei jeder der Messreihen handelt es sich zum Beispiel jeweils um eine vorzugsweise nach Messzeitpunkten geordnete Abfolge von Messwerten eines gegebenen Sensors für eine gegebene physikalische Messgröße. Eine Abfolge kann auch geometrisch anhand von Messorten geordnet sein. Für eine gegebene physikalische Messgröße kann mehr als eine Messreihe erfasst werden, wenn redundante Sensoren vorgesehen sind. Die Messzeitpunkte können zum Beispiel jede Stunde, jede Minute oder jede Sekunde gewählt sein. Denkbar sind auch unregelmäßige zeitliche Abstände zwischen Messzeitpunkten.

Mit Hilfe des vorgeschlagenen Verfahrens können durch den Schwellwertvergleich offenkundig fehlerhafte Messwerte als anomale Messwerte kategorisiert werden. Ferner können durch die weitere Verfahrensstufe nicht offenkundig fehlerhafte Messwerte anhand statistischer Kriterien unter Verwendung des Lageparameters als anomale Messwerte kategorisiert werden.

In einer Weiterbildung umfasst das Berechnen eines oder mehrerer statistischer Lageparameter für ausgewählte Messwerte aus einer selben und/oder unterschiedlichen Messreihen das Berechnen mehrerer statistischer Lageparameter für ausgewählte Messwerte aus einer der Messreihen und/oder mindestens eines statistischen Lageparameters für ausgewählte Messwerte aus mehreren Messreihen.

Durch Berechnen mehrerer Lageparameter für ausgewählte Messwerte aus einer der Messreihen können vorteilhafterweise Messwerte, die aufgrund von temporären Sensoranomalien von den mehreren Lageparametern abweichen, als anomal kategorisiert werden, während Messwerte, die aufgrund realer physikalischer Transienten von lediglich einem der Lageparameter abweichen, als normal kategorisiert werden können. Durch Berechnen eines Lageparameters für ausgewählte Messwerte aus mehreren Messreihen können, wenn redundante Sensoren vorgesehen sind, einzelne Messwerte, die aufgrund eines Fehlers einzelner der mehreren redundanten Sensoren von dem Lageparameter abweichen, als anomal kategorisiert werden.

Das Kategorisieren der Messwerte als normale Messwerte oder als anomale Messwerte hat den Effekt, dass die Zuverlässigkeit der Messwerte erhöht wird. Beispielsweise können bei der Beurteilung des Betriebszustands der technischen Anlage vorteilhafterweise nur zuverlässige, als normal kategorisierte Messwerte berücksichtigt werden. Die Betriebssicherheit der Anlage wird insofern erhöht, da die Einstellung von Betriebsparametern weniger durch anomale Messwerte mitbestimmt wird.

Die Aufgabe wird ferner durch ein Verfahren zum Bereitstellen von Messwerten einer technischen Anlage gelöst, welches das Durchführen einer ersten Verfahrensstufe und einer zweiten und einer dritten Verfahrensstufe umfasst.

Die erste Verfahrensstufe, die zweite Verfahrensstufe und die dritte Verfahrensstufe können sequentiell in einer beliebigen Reihenfolge oder auch zumindest teilweise parallel zueinander ausgeführt werden.

Die erste Verfahrensstufe entspricht dem zuvor und im Folgenden beschriebenen Schwellwertvergleich und umfasst ein Erfassen mindestens eines Messwerts der mindestens einen Messreihe, ein Vergleichen des mindestens einen Messwerts mit einem vorgegebenen Schwellwert zum Erzeugen eines Vergleichsergebnisses, und ein Identifizieren des mindestens einen Messwerts als normaler Messwert oder als anomaler Messwert erster Art in Abhängigkeit von dem Vergleichsergebnis.

Mit der ersten Verfahrensstufe können vorteilhafterweise Messwerte als anomale Messwerte erster Art identifiziert werden, die anhand von vorgegebenem Wissen über die Konfiguration der technischen Anlage und/oder über physikalische Sachverhalte als offenkundig fehlerhafte Messwerte erkannt werden, wie etwa negative Temperaturen bei flüssigem Wasser oder negative Drücke oder andere grobe Ausreißer, die stark von den erwarteten Werten abweichen.

Die zweite Verfahrensstufe entspricht der weiteren Verfahrensstufe gemäß den zuvor oder im Folgenden beschriebenen Ausführungsformen und umfasst:

Erfassen mehrerer ausgewählter Messwerte mehrerer Messreihen, wobei die mehreren ausgewählten Messwerte von unterschiedlichen Messsensoren für eine selbe Messgröße und einen selben Messzeitpunkt bereitgestellt sind; Berechnen eines statistischen Lageparameters der ausgewählten Messwerte; und für mindestens einen der erfassten ausgewählten Messwerte: Vergleichen des mindestens einen Messwerts mit dem statistischen Lageparameter und, falls der mindestens eine Messwert um mehr als eine vorgegebene relative Abweichung oder eine vorgegebene absolute Abweichung von dem statistischen Lageparameter abweicht, Identifizieren des mindestens einen Messwerts als anomaler Messwert zweiter Art.

Bei der zweiten Verfahrensstufe kann der statistische Lageparameter als Mehrheitsentscheidung redundanter Sensoren über den angenommenen physikalisch korrekten Messwert aufgefasst werden. Weicht ein einzelner unter den mehreren für eine selbe Messgröße und einen selben Messzeitpunkt bereitgestellten Messwerten zu sehr von dem statistischen Lageparameter ab, wird der betreffende Messwert als anomaler Messwert identifiziert. Wird als Kriterium eine relative Abweichung verwendet, kann das Identifizieren solcher anomalen Messwerte zweiter Art vorteilhafterweise ohne Kenntnis über die physikalische Messgröße erfolgen.

Wird eine absolute Abweichung verwendet, können durch geeignete Wahl der absoluten Abweichung vorhandene Kenntnisse über die physikalische Messgröße und die erwarteten Eigenschaften des zugehörigen Messsensors in das Identifizieren von anomalen Messwerten zweiter Art mit einfließen.

Die dritte Verfahrensstufe kann Teil der weiteren Verfahrensstufe, wie es zuvor und/oder im Folgenden erläutert ist, sein und umfasst:

ein Erfassen einer Messreihe mit Messwerten, wobei die Messwerte von einem Messsensor für eine selbe Messgröße und unterschiedliche Messzeitpunkte bereitgestellt sind und die Messwerte in der Messreihe zeitlich geordnet sind; und
für mindestens einen der erfassten Messwerte der Messreihe jeden der folgenden Schritte:

Bestimmen eines ersten statistischen Lageparameters und eines ersten statistischen Streuungsparameters für eine erste vorgegebene Anzahl von Messwerten derselben Messreihe, die dem mindestens einen Messwert der Messreihe zeitlich vorangehen;
Bestimmen eines zweiten statistischen Lageparameters und eines zweiten statistischen Streuungsparameters für eine zweite vorgegebene Anzahl von Messwerten derselben Messreihe, die dem mindestens einen Messwert der Messreihe zeitlich nachfolgen;
Berechnen eines ersten Quotienten aus dem Betrag der Differenz zwischen dem mindestens einen Messwert und dem ersten statistischen Lageparameter und dem ersten statistischen Streuungsparameter;
Berechnen eines zweiten Quotienten aus dem Betrag der Differenz zwischen dem mindestens einen Messwert und dem zweiten statistischen Lageparameter $\mu_f$ und dem zweiten statistischen Streuungsparameter;
Identifizieren des mindestens einen Messwerts als anomaler Messwert dritter Art, falls der erste Quotient größer oder gleich einem vorgegebenen ersten Vergleichswert ist und der zweite Quotient größer oder gleich einem vorgegebenen zweiten Vergleichswert ist, oder als normaler Messwert, falls der erste Quotient kleiner als der vorgegebene erste Vergleichswert oder der zweite Quotient kleiner als der vorgegebene zweite Vergleichswert ist.

Bei der dritten Verfahrensstufe beschreibt der erste Quotient für einen ausgewählten Messwert das Verhältnis von der Abweichung des ausgewählten Messwerts von einem Lageparameter eines gleitenden Fensters der Größe aus zeitlich dem ausgewählten Messwert mindestens teilweise vorangehenden Messwerten (im Weiteren "vorangehendes gleitendes Fenster") zu einem Streuungsparameter des gleitenden Fensters. Das Verhältnis stellt somit ein auf die Streuungsbreite der Verteilung der mindestens teilweise vorangehenden Messwerte normiertes Maß für die Abweichung des Messwerts von dem Lageparameter der Verteilung dar.

Der zweite Quotient beschreibt das Verhältnis von der Abweichung des ausgewählten Messwerts von einem Lageparameter eines gleitenden Fensters der Größe aus zeitlich dem ausgewählten Messwert mindestens teilweise nachfolgenden Messwerten (im Weiteren "nachfolgendes gleitendes Fenster") zu einem Streuungsparameter des gleitenden Fensters. Dieses Verhältnis stellt somit ein auf die Streuungsbreite der Verteilung der mindestens teilweise nachfolgenden Messwerte normiertes Maß für die Abweichung des Messwerts von dem Lageparameter der Verteilung dar.

Durch Vergleichen der Quotienten mit vorgegebenen dimensionslosen Vergleichswerten können Messwerte, die beispielsweise aufgrund einer temporären Sensoranomalie sowohl von dem Lageparameter des vorangehenden gleitenden Fensters als auch von dem Lageparameter des nachfolgenden gleitenden Fensters zu sehr abweichen, ohne Kenntnis über die physikalische Messgrö-ße als anomale Messwerte dritter Art identifiziert werden, während Messwerte, die aufgrund einer physikalischen Transiente der Messgröße nur von einem der beiden Lageparameter abweichen und bei einer herkömmlichen Glättung mit einem zentrierten gleitenden Fenster fälschlicherweise als anomale Messwerte identifiziert werden, als normale Messwerte identifiziert werden können.

Die Anzahl der Messwerte in dem vorangehenden gleitenden Fenster beträgt bevorzugt 5 bis 200, besonders bevorzugt 10 bis 100 und ganz besonders bevorzugt 30 bis 60. Die Anzahl der Messwerte des nachfolgenden gleitenden Fensters beträgt bevorzugt 5 bis 200, besonders bevorzugt 20 bis 50 und ganz besonders bevorzugt 20 bis 30.

Der erste Vergleichswert ist vorzugsweise größer als zwei und kleiner als vier, und ist besonders bevorzugt drei. Der zweite Vergleichswert ist vorzugsweise größer oder gleich zwei und kleiner als vier und ist besonders bevorzugt drei.

Das Identifizieren eines Messwertes als normaler Messwert oder als anomaler Messwert zweiter bzw. dritter Art gemäß der zweiten bzw. der dritten Verfahrensstufe ist von dem Kategorisierungsschritt für einen jeweiligen Messwert umfasst und hat den Effekt, die Zuverlässigkeit der bereitgestellten Messwerte noch weiter zu erhöhen.

Gemäß einer weiteren Ausführungsform ist der statistische Lageparameter ein Medianwert, ein Mittelwert oder ein Biweight-Mittelwert; der erste statistische Lageparameter und der zweite statistische Lageparameter sind jeweils ein Mittelwert, ein Medianwert oder ein Biweight-Mittelwert; und der erste statistische Streuungsparameter und der zweite statistische Streuungsparameter sind jeweils eine Standardabweichung, eine mittlere absolute Abweichung oder eine Biweight-Standardabweichung.

Vorzugsweise ist der statistische Lageparameter ein Medianwert, der erste und der zweite statistische Lageparameter, sind vorzugsweise jeweils Mittelwerte, und der erste und der zweite statistische Streuungsparameter sind vorzugsweise Standardabweichungen, und der zweite Vergleichswert ist ganz besonders bevorzugt zwei.

In Ausführungsformen umfasst die dritte Verfahrensstufe ferner ein Identifizieren eines jeweiligen Messwerts der Messreihe als Rauschen, wenn der erste Quotient größer oder gleich einem vorgegebenen dritten Vergleichswert ist und der zweite Quotient größer oder gleich einem vorgegebenen vierten Vergleichswert ist. Dabei ist der vorgegebene dritte Vergleichswert kleiner oder gleich dem vorgegebenen ersten Vergleichswert und der vorgegebene vierte Vergleichswert kleiner oder gleich dem vorgegebenen zweiten Vergleichswert ist.

Der dritte vorgegebene Vergleichswert und der vierte vorgegebene Vergleichswert betragen vorzugsweise jeweils zwei.

Unter einem Rauschen kann ein unzuverlässiger Messwert verstanden werden, dessen Ursache nicht eine Anomalie, eine Fehlfunktion oder ein Ausfall des zugehörigen Messsensors ist, der aber aufgrund physikalischer Störeinflüsse übermäßig von dem tatsächlichen Wert der zugehörigen physikalischen Messgröße abweicht.

Zu stark rauschende Messwerte, die nicht auf eine Fehlfunktion des Messsensors zurückgehen, jedoch nicht zuverlässig genug für eine Ermittlung des tatsächlichen Werts der zugehörigen physikalischen Messgröße sind, können als Rauschen identifiziert werden, wodurch die Zuverlässigkeit der bereitgestellten Messwerte weiter erhöht wird.

In weiteren Ausführungsformen des Verfahrens zum Bereitstellen von Messwerten einer technischen Anlage umfasst das Identifizieren eines Messwerts ferner ein Verändern des Messwerts, sofern der Messwert nicht als normaler Messwert identifiziert wird.

Durch geeignetes Verändern eines nicht normalen Messwerts kann die Zuverlässigkeit der bereitgestellten Messwerte und damit die Zuverlässigkeit der Beurteilung des Betriebszustands des technischen Systems weiter verbessert werden.

In Ausführungsformen umfasst das Verändern eines als anomal oder als Rauschen identifizierten Messwerts das Versehen des Messwerts mit einem Kennzeichen und/oder das Entfernen des Messwerts aus der Messreihe.

Wenn Messwerte, die als anomal oder als Rauschen identifiziert werden, mit einem Kennzeichen versehen oder aus der Messreihe entfernt werden, können sie bei der Beurteilung des Betriebszustands der technischen Anlage unberücksichtigt bleiben, wodurch die Zuverlässigkeit der Beurteilung verbessert wird. Werden solche Messwerte entfernt, verringert sich außerdem die Menge der bereitgestellten Messwert-Daten, so dass der Rechenaufwand beim Auswerten der Daten und Beurteilen des Betriebszustands der technischen Anlage reduziert wird.

In Ausführungsformen erfolgt bei der zweiten Verfahrensstufe ferner, wenn ein Messwert als anomaler Messwert zweiter Art identifiziert wird, ein Entfernen des als anomaler Messwert zweiter Art identifizierten Messwerts aus den mehreren ausgewählten Messwerten und ein Wiederholen der Schritte der zweiten Verfahrensstufe für die verbleibenden ausgewählten Messwerte, sofern mehr als zwei ausgewählte Messwerte verbleiben.

Wenn bei der Mehrheitsentscheidung gemäß der zweiten Verfahrensstufe ein Messwert als anomaler Messwert zweiter Art identifiziert wird, der die Mehrheitsentscheidung beschreibende statistische Lageparameter erneut unter Auslassung des als anomal und daher unzuverlässig identifizierten Messwertes unter Verwendung lediglich der verbleibendenden ausgewählten Messwerte neu berechnet. Dadurch verbessert sich die Zuverlässigkeit des neu berechneten Lageparameters. Anschließend werden die verbliebenen ausgewählten Messwerte erneut mit dem zuverlässigeren, neu berechneten Lageparameter verglichen, wobei ggf. ein weiterer anomaler Lageparameter identifiziert werden kann. Diese Schritte werden so lange iterativ wiederholt, bis entweder keiner der verbleibenden Messwerte mehr als anomal identifiziert wird oder nur noch zwei Messwerte verblieben sind und keine Mehrheitsentscheidung mehr möglich ist, und die zuletzt verbleibenden Messwerte werden als normale Messwerte identifiziert.

Das Identifizieren eines Messwerts, der als anomaler Messwert identifiziert wird, umfasst ferner ein Speichern von klassifizierenden Informationen über einen Schweregrad einer Anomalie, über eine zeitliche Korrelation der Anomalie und/oder über das mehrfache Auftreten der Anomalie bei verschiedenen Messsensoren für denselben Messzeitpunkt.

Unter einer Anomalie kann insbesondere ein Sachverhalt verstanden werden, der die Ursache für einen anomalen Messwert bildet. Es können also klassifizierende Informationen ermittelt werden, die Rückschlüsse auf die Ursache für eine Anomalie zulassen. Diese Rückschlüsse können von einem Bediener oder einem automatischen System, wie etwa einem künstlichen neuronalen Netzwerk, getroffen und bei der Beurteilung des Betriebszustands des technischen Systems, der technischen Anlage und/oder der Messsensoren berücksichtigt werden.

Insbesondere können klassifizierende Informationen über einen Schweregrad einer Anomalie dadurch ermittelt und gespeichert werden, dass die zweite Verfahrensstufe ferner umfasst:

Klassifizieren eines als anomaler Messwert zweiter Art identifizierten Messwerts als schwerwiegende Anomalie, falls der als anomaler Messwert zweiter Art klassifizierte Messwert um mehr als eine zweite relative oder absolute Abweichung von dem statistischen Lageparameter abweicht, oder als minderschwere Anomalie, falls der als anomaler Messwert zweiter Art identifizierte Messwert um nicht mehr als die vorgegebene zweite Schwankungsbreite von dem statistischen Lageparameter abweicht.

Hierbei ist die zweite Abweichung entweder eine vorgegebene zweite Abweichung, die größer als die vorgegebene erste Abweichung ist, oder eine Summe aus der vorgegebenen ersten Abweichung und einer aus den ausgewählten Messwerten ermittelten Größe. Vorzugsweise ist die zweite Schwankungsbreite die Summe aus der vorgegebenen ersten Schwankungsbreite und einem Quotienten aus der Standardabweichung der ausgewählten Messwerte und der Wurzel aus der Anzahl der ausgewählten Messwerte.

Ferner kann ein Schweregrad einer Anomalie insbesondere dadurch ermittelt und gespeichert werden, dass die dritte Verfahrensstufe ferner umfasst:
Klassifizieren eines als anomaler Messwert dritter Art identifizierten Messwerts als schwerwiegende Anomalie, falls der erste Quotient größer oder gleich einem vorgegebenen fünften Vergleichswert ist und der zweite Quotient größer oder gleich einem vorgegebenen sechsten Vergleichswert ist, oder als minderschwere Anomalie, falls der erste Quotient kleiner als der vorgegebene fünfte Vergleichswert oder der zweite Quotient kleiner als der vorgegebene sechste Vergleichswert ist, wobei der vorgegebene fünfte Vergleichswert und der vorgegebene sechste Vergleichswert jeweils größer sind als der vorgegebene erste Vergleichswert bzw. der vorgegebene zweite Vergleichswert und vorzugsweise zum Beispiel gleich vier sind.

Insbesondere können ferner klassifizierende Informationen über eine zeitliche Korrelation dadurch ermittelt und gespeichert werden, sodass das Verfahren ferner umfasst:

Erfassen einer oder mehrerer Messreihen mit Messwerten, wobei die Messwerte von einem oder mehreren Messsensoren für eine selbe Messgröße und unterschiedliche Messzeitpunkte bereitgestellt sind und die Messwerte in der einen oder den mehreren Messreihen jeweils zeitlich geordnet sind; und
für einen jeweiligen Messwert einer der Messreihen, der als anomaler Messwert erster, zweiter oder dritter Art identifiziert ist, das Klassifizieren des jeweiligen Messwerts als zeitlich korrelierte Anomalie, falls mindestens ein weiterer Messwert für den dem Messzeitpunkt des jeweiligen Messwerts in der Messreihe des weiteren Messwerts vorausgehenden oder nachfolgenden Messzeitpunkt ebenfalls als anomaler Messwert derselben Art identifiziert ist, oder als zeitlich isolierte Anomalie, falls keiner der weiteren Messwerte für den dem Messzeitpunkt des jeweiligen Messwerts in der Messreihe des jeweiligen weiteren Messwerts vorausgehenden oder nachfolgenden Messzeitpunkt als anomaler Messwert derselben Art identifiziert ist.

Insbesondere können klassifizierende Informationen über ein mehrfaches Auftreten einer Anomalie bei verschiedenen Messsensoren für denselben Messzeitpunkt dadurch ermittelt und gespeichert werden, dass das Verfahren ferner umfasst:

Erfassen mehrerer ausgewählter Messwerte, die von unterschiedlichen Messsensoren für eine selbe Messgröße und einen selben Messzeitpunkt bereitgestellt sind;
Ermitteln der Anzahl der normalen Messwerte und der Anzahl der anomalen Messwerte unter den ausgewählten Messwerten; Klassifizieren der jeweiligen anomalen Messwerte unter den ausgewählten Messwerten als Anomalie einer Sensorenmehrheit, falls die Anzahl der anomalen Messwerte unter den ausgewählten Messwerten größer als ein vorgegebener Höchstwert oder die Anzahl der normalen Messwerte kleiner als ein vorgegebener Mindestwert ist, oder als Anomalie eines spezifischen Sensors, wenn die Anzahl der anomalen Messwerte nicht größer als ein vorgegebener Höchstwert oder die Anzahl der normalen Messwerte nicht kleiner als ein vorgegebener Mindestwert ist.

Bei den vorgenannten Schritten kann das Klassifizieren das Speichern von klassifizierenden Informationen umfassen, welche für jede Anomalie Informationen über die Art der Anomalie, ein Kennzeichen für zeitlich korrelierte oder zeitlich isolierte Anomalie, ein Kennzeichen für schwerwiegende oder minderschwere Anomalie und/oder ein Kennzeichen für Anomalie einer Sensorenmehrheit oder Anomalie eines spezifischen Sensors umfassen.

Die klassifizierenden Informationen gemäß der vorliegenden Ausführungsform sind insbesondere vorteilhaft bei der Ermittlung von Ursachen für Anomalien von Messsensoren.

Das Ermitteln und Speichern von klassifizierenden Informationen ist zum Beispiel von dem Kategorisieren der Messwerte umfasst.

In Ausführungsformen erfolgen ferner die Schritte:

Bestimmen der Anzahl der von einem ausgewählten Messsensor bereitgestellten Messwerte und der Anzahl der anomalen Messwerte unter den von dem ausgewählten Messsensor bereitgestellten Messwerten; und
Deaktivieren des ausgewählten Messsensors, wenn der Anteil der anomalen Messwerte an den von dem ausgewählten Messsensor bereitgestellten Messwerten einen vorgegebenen Akzeptanzwert überschreitet.

Einerseits wird durch Deaktivieren von Messsensoren die weiter zu betrachtende Datenmenge reduziert und andererseits ein Energieverbrauch durch die Gesamtheit der Messsensoren verringert.

In noch weiteren Ausführungsformen werden nur die weiteren Verfahrensstufen durchgeführt, ohne zuvor einen Schwellwertvergleich vorzunehmen. Insofern wird dann lediglich eine statistische Betrachtung insbesondere mit Hilfe eines oder mehrerer Lage- und/oder Streuungsparameter durchgeführt. Insofern werden in alternativen Ausführungsformen des Verfahrens nur die erste, zweite oder dritte Verfahrensstufe zum Kategorisieren der Messwerte durchgeführt.

In weiteren Ausführungsformen wird ein technisches System mit einer technischen Anlage, mindestens einem Messsensor und einer programmgesteuerten Einrichtung vorgeschlagen, wobei die programmgesteuerte Einrichtung zum Durchführen des zuvor oder im Folgenden beschriebenen Verfahrens zum Bereitstellen von Messwerten eingerichtet ist. Die für das vorgeschlagene Verfahren beschriebenen Ausführungsformen und Merkmale gelten für das vorgeschlagene technische System entsprechend.

Weiterhin wird ein Verfahren zum Betreiben eines technischen Systems mit einer technischen Anlage, mindestens einem Messsensor und einer programmgesteuerten Einrichtung vorgeschlagen, welche ein Durchführen des Verfahrens gemäß der zuvor oder im Folgenden beschriebenen Ausführungsform des Verfahrens mit Messwerten von dem mindestens einen Messsensor für mindestens eine physikalische Messgröße in der technischen Anlage umfasst. Ein Betriebsparameter der technischen Anlage wird dabei in Abhängigkeit der von dem Verfahren zum Bereitstellen von zuverlässigen Messwerten bereitgestellten Messwerte geändert oder gesteuert.

Das Verändern des Betriebsparameters der technischen Anlage kann insbesondere ein Deaktivieren der technischen Anlage zum Durchführen eines Wartungsvorgangs umfassen. Da das Deaktivieren in Abhängigkeit der von dem Verfahren bereitgestellten Messwerte mit verbesserter Zuverlässigkeit erfolgt, kann vorteilhafterweise eine Just-in-Time-Wartung realisiert werden und dadurch können die Wartungskosten minimiert werden. Anhand der bereitgestellten Messwerte wird insofern ein Betriebszustand der technischen Anlage festgelegt. Es kann auch ein geschlossener Regelkreis mit Hilfe der zuverlässig bereitgestellten Messwerte zum Betreiben der Anlage erstellt werden.

Bei der technischen Anlage des vorgeschlagenen Systems kann es sich insbesondere um eine Turbine, einen Kompressor oder einen Generator handeln, insbesondere um eine Gasturbine oder um eine Windturbine.

Der nach dem Deaktivieren durchgeführte Wartungsvorgang kann einen Off-Line-Waschvorgang der Leitschaufeln einer Gasturbine umfassen. Alternativ hierzu kann in Abhängigkeit der von dem Verfahren bereitgestellten Messwerte ein On-Line-Waschvorgang eingeleitet werden, ohne die Gasturbine zu deaktivieren.

Bei dem Messsensor des vorgeschlagenen technischen Systems kann es sich insbesondere um einen Temperatursensor, einen Drucksensor, einen Bewegungssensor oder einen Vibrationssensor handeln.

Weiterhin wird ein Computerprogrammprodukt vorgeschlagen, welches auf einer programmgesteuerten Einrichtung die Durchführung des Verfahrens gemäß einer der ersten bis achten Ausführungsform veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1 zeigt eine schematische Darstellung eines technischen Systems mit einer technischen Anlage, die zum Durchführen eines Verfahrens zum Bereitstellen von Messwerten oder Messdaten eingerichtet ist.

Fig. 2 zeigt eine schematische Darstellung von möglichen Messdaten.

Fig. 3 zeigt ein schematisches Flussdiagram für ein Verfahren zum Bereitstellen von Messwerten gemäß einem ersten Ausführungsbeispiel.

Fig. 4 zeigt ein schematisches Flussdiagram für das Verfahren gemäß einem zweiten Ausführungsbeispiel.

Fig. 5 zeigt ein schematisches Flussdiagram für mögliche erste, zweite und dritte Verfahrensstufen.

Fig. 6 zeigt ein Flussdiagramm der Schritte der zweiten Verfahrensstufe.

Fig. 7 zeigt die Schritte, die gemäß der dritten Verfahrensstufe für einen Messwert ausgeführt werden.

Fig. 8 zeigt eine Darstellung roher Messdaten in einem ersten Fall.

Fig. 9 zeigt eine Darstellung zuverlässig bereitgestellter Messdaten.

Fig. 10 zeigt eine Darstellung roher Messdaten in einem zweiten Fall.

Fig. 11 zeigt eine Darstellung zuverlässig bereitgestellter Messdaten in dem zweiten Fall.

In den Figuren sind gleiche oder funktionsgleiche Elemente mit denselben Bezugszeichen versehen worden, sofern nichts anderes angegeben ist.

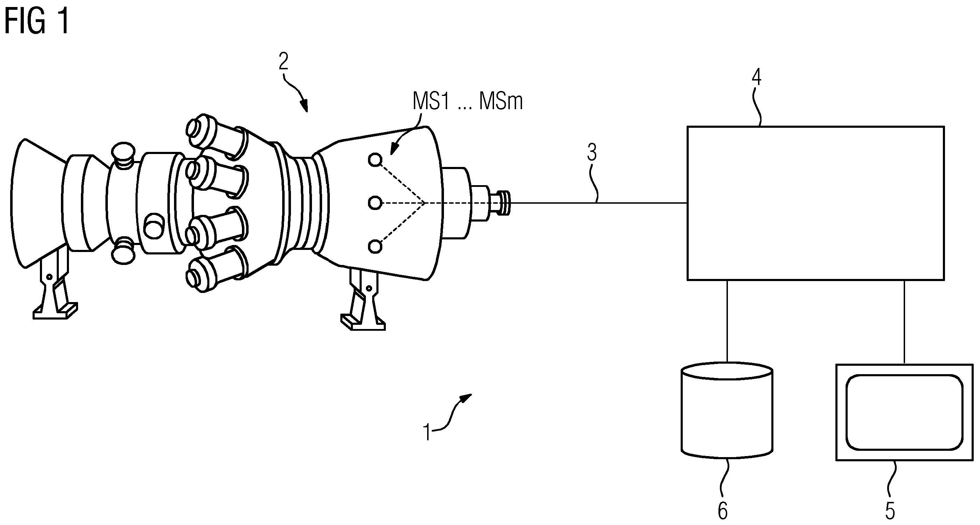

Fig. 1 zeigt eine schematische Darstellung eines technischen Systems 1 gemäß einer Ausführungsform mit einer technischen Anlage 2, wie etwa einer Gasturbine, drei Messsensoren MS1 - MS3 und einer programmgesteuerten Einrichtung, wie etwa einem Industriecomputer 4. Die Messsensoren MS1 - MS3 sind innerhalb der Gasturbine 2 angeordnet und über eine aus der Gasturbine 2 herausgeführte drahtlose oder drahtgebundene Verbindungsstrecke 3 mit dem Industriecomputer 4 verbunden. Der Industriecomputer 4 ist mit einer Anzeigeeinrichtung 5 und einem Speicher 6 gekoppelt.

Die innerhalb der Gasturbine 2 angeordneten Messsensoren MS1 - MS3 stellen über die Verbindungsstrecke 3 rohe Messdaten RMD an den Industriecomputer 4 bereit.

Der Industriecomputer 4 führt ein Computerprogramm aus, das die Durchführung eines Verfahrens zum Bereitstellen von Messwerten einer technischen Anlage mit den von den Temperatursensoren bereitgestellten rohen Messdaten RMD veranlasst.

In einer Variante kann der Industriecomputer 4 außerdem über eine (nicht gezeigte) Rückkopplungsleitung mit einer (nicht gezeigten) Steuer- und/oder Regeleinrichtung für die Gasturbine 1 gekoppelt sein. In dieser Variante führt der Industriecomputer 4 ferner ein Computerprogramm aus, das die Durchführung eines Verfahrens zum Betreiben des technischen Systems 1 und insbesondere zum Verändern eines Betriebsparameters der Gasturbine 2 in Abhängigkeit von bereitgestellten zuverlässigen Messwerten veranlasst.

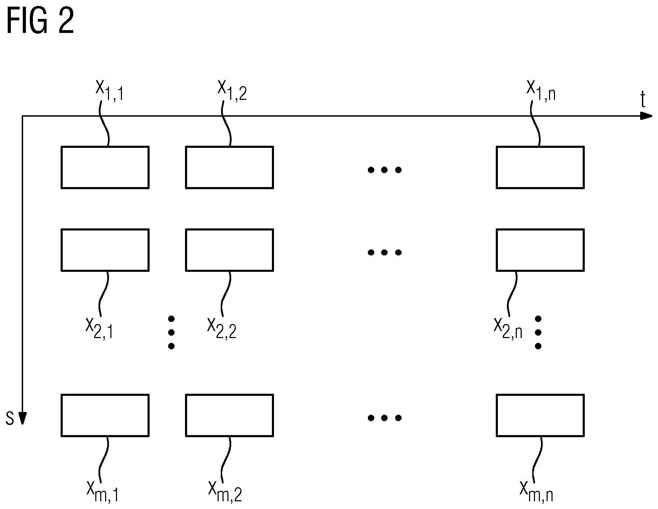

Fig. 2 zeigt eine schematische Darstellung zur Veranschaulichung von Messdaten, wie sie erfasst und bereitgestellt werden können. In Fig. 2 ist auf der horizontalen Achse die Zeit als Nummer eines jeweiligen Messzeitpunkts und auf der vertikalen Achse die Sensornummer aufgetragen. In vertikaler Richtung untereinander angeordnet sind $m$ Messreihen für $m$ redundante Sensoren aus jeweils $n$ in horizontaler Richtung angeordneten Messwerten $x$ für $n$ Messzeitpunkte für eine selbe physikalische Größe. In der vorliegenden Beschreibung werden die Messdaten mit dem Gleichungssymbol $x_{s,t}$ bezeichnet, wobei $s$ und $t$ ganze Zahlen sind, $s = 1 \ldots m$ ist und die in Fig. 2 auf der vertikalen Achse aufgetragene Nummer des jeweiligen Sensors bezeichnet, und $t = 1 \ldots n$ ist und die in Fig. 2 auf der horizontalen Achse aufgetragene Nummer des jeweiligen

Messzeitpunkts bezeichnet, wobei größere $t$ für spätere Messzeitpunkte und kleinere $t$ für frühere Messzeitpunkte stehen. Anders ausgedrückt sind die $n$ Messwerte $x_{s,t}$ eines Messsensors MSs mit der Nummer $s$ für $t=1 \ldots n$ in zeitlicher Abfolge der Messzeitpunkte der jeweiligen Messwerte des Messsensors MSs angeordnet.

Die Messdaten weiterer Messreihen können mit Messwerten $y$, $z$, ... für eine oder mehrere weitere physikalische Messgrößen in gleichartiger Weise notiert und schematisch dargestellt werden können. Zum einfacheren Verständnis werden in der folgenden Beschreibung lediglich Messwerte $x$ einer selben physikalischen Messgröße betrachtet.

Die Messdaten werden beispielsweise als Paketdatenstrom, als Vektor, als Array, als verkettete Liste oder dergleichen vorgehalten.

Der Begriff Messwert bezieht sich zum Beispiel auf einen Datensatz, der mindestens ein numerisches Messdatenfeld, beispielsweise einen Fließkommawert, umfasst.

In Varianten kann der Datensatz eines Messwerts weitere kennzeichnende Informationen umfassen, die numerische Datenfelder, beispielsweise einen Ganzzahlwert und/oder Binärwerte umfassen können, wie zum Beispiel ein ganzzahliges Kennzeichen, das die Sensornummer des Sensors angibt, der den Messwert geliefert hat, oder ein binäres Kennzeichen, das angibt, ob der Messwert ein normaler oder ein anomaler Messwert ist, ein binäres Kennzeichen, das angibt, ob ein anomaler Messwert ein zeitlicher korrelierter oder ein zeitlich isolierter anomaler Messwert ist, ein binäres Kennzeichen, das angibt, ob ein anomaler Messwert eine schwerwiegende oder eine minderschwere Anomalie ist und/oder ein binäres Kennzeichen, das angibt, ob ein anomaler Messwert auf eine Anomalie einer Sensorenmehrheit oder eine Anomalie eines spezifischen Sensors zurückzuführen ist. In einigen Ausführungsformen kann der Datensatz eines Messwerts einen Zeiger umfassen, der auf einen weiteren Datensatz zeigt, in welchem kennzeichnende Informationen wie vorstehend beschrieben gespeichert sind.

Nachstehend werden Ausführungsbeispiele für ein Verfahren zum Bereitstellen von Messwerten einer technischen Anlage beschrieben.

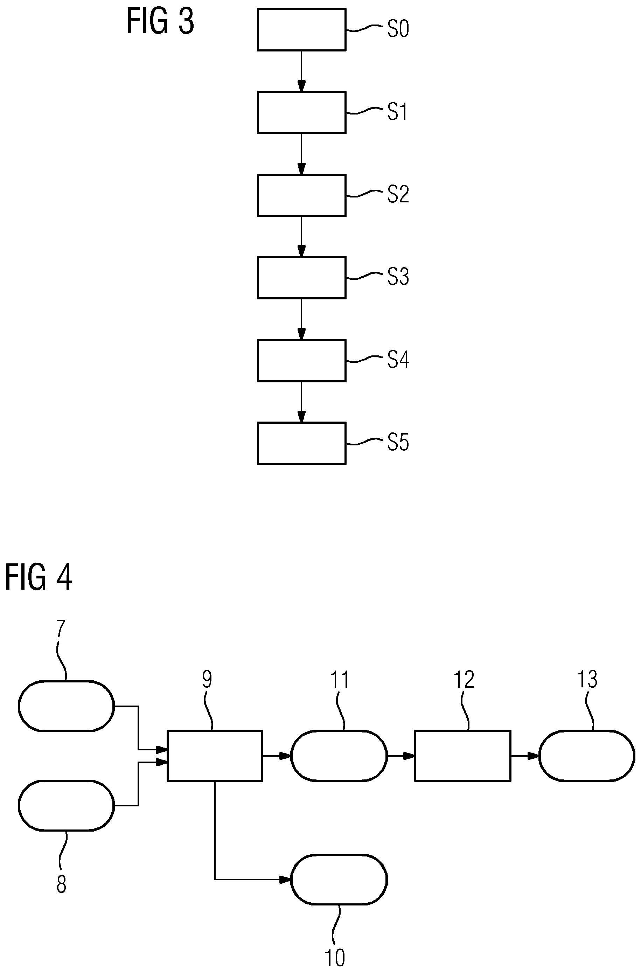

Fig. 3 zeigt ein schematisches Ablaufdiagramm eines Verfahrens gemäß einem ersten Ausführungsbeispiel. Das Verfahren umfasst sechs Schritte S0 bis S6, die nacheinander ausgeführt werden.

In Schritt S0 werden von den Messsensoren MS1...MSm in der Gasturbine 2, wie sie in Fig. 1 angedeutet ist, als rohe Messdaten RMD bereitgestellt. Die rohen Messdaten RMD umfassen Messwerte für physikalische Messgrößen der jeweiligen Messsensoren MS1...MSm.

In Schritt S1 werden aus den bereitgestellten rohen Messdaten RMD Messwerte 7 erfasst, die Messwerte $x_{s,t}$ für eine physikalische Messgröße x in m Messreihen umfassen.

In Schritt S2 werden einzelne Messwerte $x_{s,t}$ jeweils mit einem vorgegebenen unteren Schwellwert und einem vorgegebenen oberen Schwellwert verglichen. Messwerte, die kleiner als der vorgegebene untere Schwellwert oder größer als der vorgegebene obere Schwellwert sind, werden als anomal kategorisiert. Die übrigen Messwerte werden als normal kategorisiert.

In Schritt S3 wird eine weitere Verfahrensstufe durchgeführt, die das Berechnen eines oder mehrerer statistischer Lageparameter umfasst.

In einer Variante wird bei Schritt S3 zum Beispiel für eine Auswahl aus Messwerten aus mehreren Messreihen mehrerer Sensoren für einen selben Zeitpunkt t ein statistischer Lageparameter wie etwa ein Medianwert bestimmt. Die ausgewählten Messwerte werden nacheinander mit dem Medianwert verglichen und jeweils als anomal identifiziert, wenn sie um mehr als eine vorbestimmte absolute oder relative Abweichung von dem Medianwert abweichen. Andernfalls werden die jeweiligen Messwerte als normal identifiziert.

In einer weiteren Variante wird bei Schritt S3 zum Beispiel für einen ausgewählten Messwert ein vorangehendes Fenster mit einer eine ersten Auswahl aus Messwerten derselben Messreihe gebildet, die Messzeitpunkten entsprechen, die dem ausgewählten Messwert zeitlich vorangehen, und es wird ein nachfolgendes Fenster mit einer zweiten Auswahl aus Messwerten derselben Messreihe gebildet, die Messzeitpunkten entsprechen, die dem ausgewählten Messwert zeitlich nachfolgen.

Für das vorangehende Fenster und das nachfolgende Fenster wird jeweils ein statistischer Lageparameter, wie etwa ein Mittelwert, und ein statistischer Streuungsparameter, wie etwa eine Standardabweichung, bestimmt. Für jedes der Fenster wird die Abweichung des Messwerts von dem jeweiligen Mittelwert mit der jeweiligen Standardabweichung normiert und mit einem jeweiligen vorgegebenen Vergleichswert verglichen. Ist die normierte Abweichung sowohl für das vorangehende als auch für das nachfolgende Fenster größer als der für das jeweilige Fenster vorgegebene Vergleichswert, wird der ausgewählte Messwert als anomal identifiziert, andernfalls als normal.

In Schritt S4 werden die erfassten Messdaten kategorisiert. Das Kategorisieren eines Messwerts erfolgt mindestens anhand dessen, ob der Messwert in Schritt S3 als normal oder anomal identifiziert wurde. In einigen Ausführungsformen erfolgt das Kategorisieren für als anomal identifizierte Messwerte außerdem anhand dessen, ob ein anomaler Messwert ein zeitlicher korrelierter oder ein zeitlich isolierter anomaler Messwert ist, ob ein anomaler Messwert eine schwerwiegende oder eine minderschwere Anomalie ist und/oder ob ein anomaler Messwert auf eine Anomalie einer Sensorenmehrheit oder eine Anomalie eines spezifischen Sensors zurückzuführen ist. Das Kategorisieren kann erfolgen, indem als anomal identifizierte Messwerte aus den erfassten Messwerten entfernt werden. Alternativ dazu können die als anomal identifizierte Messwerte in den erfassten Messwerten verbleiben und mit einem Kennzeichen versehen werden, dass angibt, dass es sich um anomale Messwerte handelt. Das Kategorisieren kann außerdem das Speichern kennzeichnender Informationen verknüpft mit dem Messwert umfassen, die zum Beispiel angeben, ob ein anomaler Messwert eine schwerwiegende oder eine minderschwere Anomalie ist und/oder ob ein anomaler Messwert auf eine Anomalie einer Sensorenmehrheit oder eine Anomalie eines spezifischen Sensors zurückzuführen ist.

In Schritt S5 werden die in Schritt S4 kategorisierten Messdaten zur weiteren Verwendung bereitgestellt. Optional werden die bereitgestellten Messwerte, optional gemeinsam mit den klassifizierenden Informationen, auf der Anzeigeeinrichtung 5 visualisiert. Optional werden die bereitgestellten Messwerte im Speicher 6 gespeichert und/oder dazu benutzt, um Betriebsparameter der Gasturbine 6 zu verändern. Die nunmehr zuverlässigen Messdaten werden beispielsweise zum Einstellen eines Betriebszustands der technische Anlage 2 eingesetzt. Gegenüber den Rohmessdaten RMD erlauben die verfahrensgemäß bereitgestellten einen einfacheren und zuverlässigeren Betrieb der Anlage.

Fig. 4 zeigt ein schematisches Flussdiagramm, das ein zweites Ausführungsbeispiel für das Verfahren zum Bereitstellen von Messwerten veranschaulicht.

Aus den Rohmessdaten RMD als zeitlich geordnete Messreihen erfasste Messwerte 7 und vorgegebene Parameter 8 werden in eine Anomaliedetektionseinheit (ADU) 9 eingegeben. Die Parameter 8 sind zum Beispiel Schwellwerte oder Angaben über zu berechnende statistische Größen, die aus den Messdaten ermittelt werden können. Die ADU 9 kategorisiert die Messwerte unter Verwendung der vorgegebenen Parameter 8 in normale und anomale Messwerte stellt als zuverlässig zu betrachtende normale Messwerte 10 und als unzuverlässig zu betrachtende anomale Messwerte 11 bereit. Die anomalen Messwerte 11 werden mit charakterisierenden Informationen über die Anomalie verknüpft bereitgestellt. Die anomalen Messwerte 11 werden dann in eine Anomalieklassifizierungseinheit (ACU) 12 überführt. Die ACU 12 führt eine weitere Kategorisierung der anomalen Messwerte anhand der charakterisierenden Informationen durch und stellt die anomalen Messwerte verknüpft mit den vorstehend beschriebenen klassifizierenden Informationen als Anomalie-Klassifizierung 13 bereit.

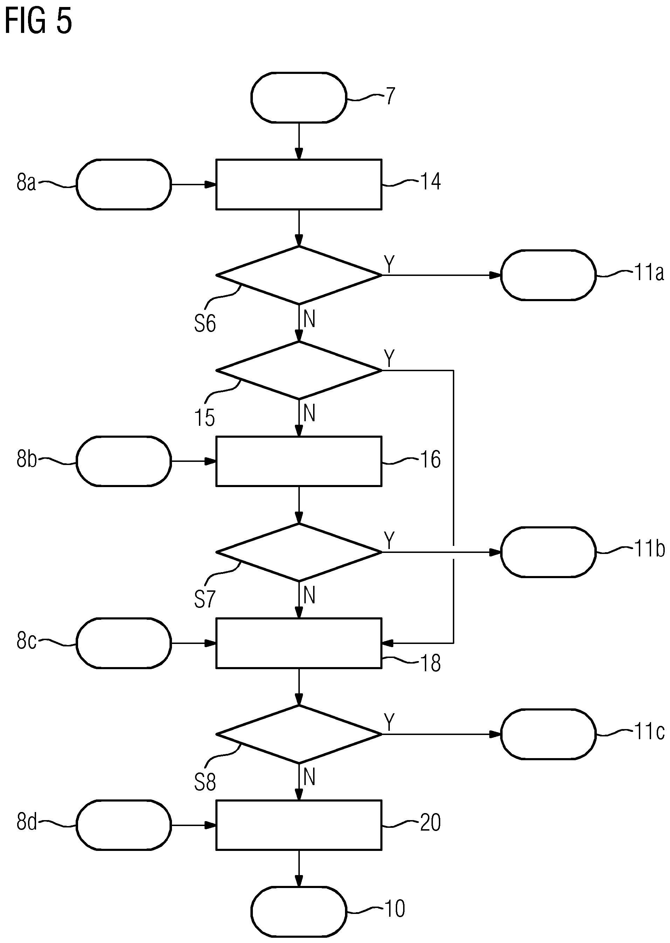

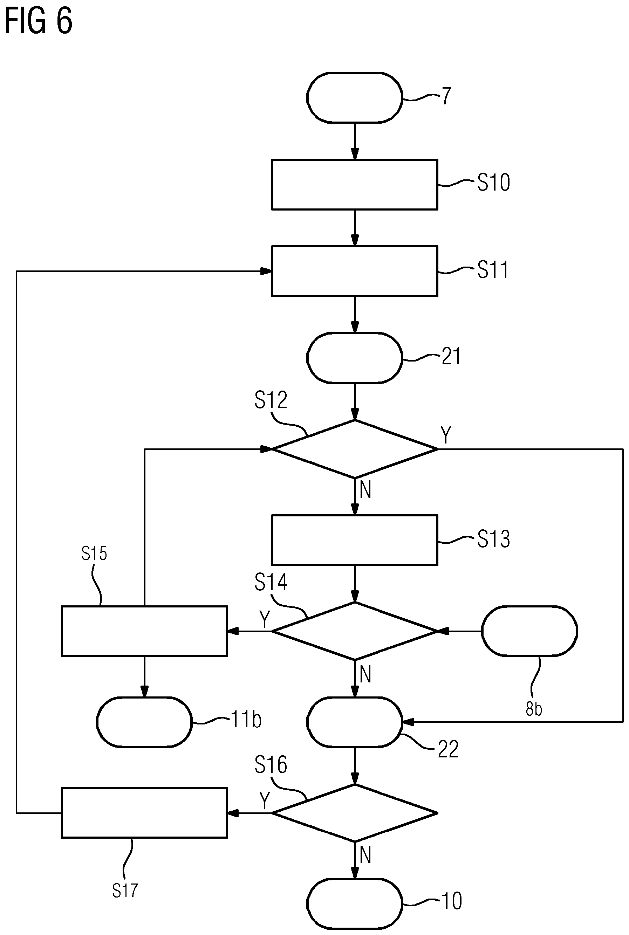

Die Funktion der ADU 9 wird nun anhand von Fig. 5 und 6 genauer erläutert.

Fig. 5 zeigt ein schematisches Flussdiagram für ein Verfahren gemäß einem zweiten Ausführungsbeispiel. Als zeitlich geordnete Messreihen erfasste rohe Messwerte 7 werden der ADU 9 bereitgestellt. In der ADU 9 durchlaufen die Messwerte 7 nacheinander einen Schwellwertvergleichsfilter 14, einen Mehrheitsentscheidfilter 16, einen statistischen Filter 18 und einen Rauschfilter 20. Der Mehrheitsentscheidfilter 16 wird nur durchlaufen, wenn zuvor die Bestimmung 15 ergibt, dass redundante Sensoren vorliegen, d.h. die Anzahl m von Sensoren für dieselbe Messgröße größer als 1 ist. Jedem der Filter 14, 16, 18, 20 werden vorgegebene Parameter 8 (8a, 8b, 8c, 8d) bereitgestellt.

Nach jedem der Filter 14, 16, 18 erfolgt für jeden Messwert $x_{s,t}$ der Messwerte 7 eine Bestimmung S6, S7, S8, ob der Messwert als von dem jeweiligen Filter 14, 16, 18 als anomaler Messwert oder als normaler Messwert identifiziert wurde. Wurde ein Messwert von dem jeweiligen Filter 14, 16, 18 als anomaler Messwert identifiziert, wird der anomale Messwert aus den Messwerten 7 entfernt und als anomaler Messwert 11 (11a, 11b, 11c) verknüpft mit die Anomalie charakterisierenden Informationen bereitgestellt. Jedem Messwert kann insofern eine charakterisierende Information zugeordnet werden. Die charakterisierenden Informationen enthalten Angaben wie Wert, Position, Größe und Anzahl der anomalen Messwerte für denselben Messzeitpunkt, sowie Angaben darüber, ob der anomale Messwert als anomaler Messwert erster, zweiter oder dritter Art identifiziert wurde.

Von dem Rauschfilter als Rauschen identifizierte Messwerte werden aus den Messwerten 7 entfernt und verworfen. Nach dem Rauschfilter sind in den Messwerten 7 nur als normal identifizierte Messwerte 7 verblieben. Diese werden als normale Messwerte 10 bereitgestellt.

Im Folgenden wird der Schwellwertvergleichsfilter 14 aus Fig. 5 näher beschrieben. Dem Schwellwertvergleichsfilter 14 werden vorbestimmte Parameter 8a bereitgestellt. Die vorbestimmten Parameter 8a umfassen einen unteren Schwellwert $th_1$ und einen oberen Schwellwert $th_u$. Der Schwellwertvergleichsfilter 14 führt dabei eine erste Verfahrensstufe durch. In der ersten Verfahrensstufe vergleicht der Schwellwertvergleichsfilter 14 jeden Messwert $x_{s,t}$ der Messwerte 7 mit dem unteren Schwellwert $th_1$ und dem oberen Schwellwert $th_u$. Ist eine der Bedingungen aus nachstehender Gleichung 1 erfüllt, wird der Schwellwert als anomaler Messwert identifiziert.

$$x_{s,t} < th_1 \qquad \text{oder} \qquad x_{s,t} > th_u \qquad \text{(Gleichung 1)}$$

Durch die erste Verfahrensstufe werden Messwerte, die bereits bei isolierter Betrachtung aufgrund des in den Schwellwerten ausgedrückten Wissens über die technische Anlage oder physikalische Gegebenheiten offenkundig nicht der Wirklichkeit entsprechen können, ausgesondert. Diese anomalen Messwerte können im Weiteren unberücksichtigt bleiben, wodurch die Zuverlässigkeit der Beurteilung des Betriebszustands der technischen Anlage erhöht wird.

Im Folgenden wird der Mehrheitsentscheidfilter 16 aus Fig. 5 näher beschrieben. Dem Mehrheitsentscheidfilter 16 werden vorbestimmte Parameter 8b und die Messwerte 7 bereitgestellt. Die vorbestimmten Parameter 8b umfassen eine vorbestimmte relative Abweichung RD und/oder eine vorbestimmte absolute Abweichung AD. Der Mehrheitsentscheidfilter 16 führt daher eine zweite Verfahrensstufe durch. Figur 6 zeigt ein Flussdiagramm der Schritte der zweiten Verfahrensstufe.

In Schritt S10 wird eine Schleife über die in den Messwerten 7 umfassten n Messzeitpunkte initialisiert, indem ein Messzeitpunktzähler t auf 1 gesetzt wird.

In Schritt S11 werden aus den Messwerten 7 die Messwerte $x_{i,t}$ mit i=1...m für die m Messsensoren für den Messzeitpunkt j ausgewählt, und eine Variable s, die die Anzahl der Auswahl 21 an Messwerten angibt, wird auf m gesetzt.

In Schritt S12 wird bestimmt, ob die Größe s der Auswahl 21 kleiner oder gleich zwei ist. Ist s kleiner oder gleich zwei, werden die Messwerte der Auswahl 21 als verbleibende normale Messwerte 22 identifiziert, und das Verfahren wird bei Schritt S16 fortgesetzt. Ist s nicht kleiner oder gleich zwei, wird das Verfahren bei Schritt S13 fortgesetzt.

In Schritt S13 wird nun ein Medianwert $\mu_v(t)$ der ausgewählten Messwerte für den Zeitpunkt t berechnet. Der Medianwert ist ein Beispiel für einen statistischen Lageparameter. Die Wahl des Medianwerts als Lageparameter ist vorteilhaft, weil der Medianwert sich aufgrund von Untersuchungen der Anmelderin als besonders robust gegen Ausreißer bzw. anomale Messwerte gezeigt hat. Statt des Medianwerts kann für $\mu_v$ jedoch auch jeder andere statische Lageparameter wie beispielsweise ein Mittelwert oder ein Biweight-Mittelwert berechnet werden.

In Schritt S14 wird eine Schleife über alle Messwerte der Auswahl ausgeführt. Mit Hilfe eines Sensorzählers i wird für jedes i=1 bis s bestimmt, ob der Messwert $x_{i,t}$ um mehr als die vorbestimmte Abweichung AD bzw. RD von dem Medianwert $\mu_v$ abweicht. Ist eine absolute Abweichung AD vorgegeben, erfolgt die Bestimmung durch Auswerten der Bedingung aus nachstehender Gleichung (2):

$$\left| x_{i,t} - \mu_v(t) \right| > AD \qquad \text{(Gleichung 2)}$$

Ist eine relative Abweichung RD vorgegeben, erfolgt die Bestimmung durch Auswerten der Bedingung aus nachstehender Gleichung (3).

$$\frac{|x_{i,t} - \mu_v(t)|}{\mu_v(t)} > RD \qquad (\text{Gleichung } 3)$$

Ist die Bedingung für kein i erfüllt, d.h., wenn keiner der ausgewählten Messwerte $x_{i,t}$ um mehr als die vorbestimmte Abweichung von dem Medianwert $\mu_v$ abweicht, werden die ausgewählten Messwerte der Auswahl 21 als zuverlässige, d.h. normale Messwerte 22 identifiziert, und das Verfahren wird mit Schritt S16 fortgesetzt.

Ist die Bedingung für ein i erfüllt, wird das Verfahren mit Schritt S15 fortgesetzt.

In Schritt S15 der Messwert $x_{i,t}$ als anomaler Messwert 11b zweiter Art identifiziert, der Messwert $x_{i,t}$ wird aus der Auswahl entfernt und die Variable s, die die Größe der Auswahl angibt, wird um 1 reduziert. Anschließend wird das Verfahren mit Schritt S12 fortgesetzt.

In Schritt S16 wird bestimmt, ob weitere Messzeitpunkte in den Messdaten 7 verfügbar sind, d.h., ob die Bedingung t<n erfüllt ist, wobei n die Anzahl der Messzeitpunkte in den Messdaten 7 ist. Falls ja, wird das Verfahren mit Schritt S17 fortgesetzt. In Schritt S17 wird der Zähler t um eins erhöht und das Verfahren wird mit Schritt S11 fortgesetzt.

Falls in Schritt S16 keine weiteren Messzeitpunkte verfügbar sind, d.h. t>=n, so werden alle beim Durchlaufen des Schritts S12 oder S14 als normal identifizierten Messwerte 22 als normale Messwerte 10 bereitgestellt. Die normalen Messwerte 10 können als Messwerte 7 einer weiteren Verfahrensstufe bereitgestellt werden oder als normale Messwerte 10 als Ausgabe der der ACU bereitgestellt werden. Die zweite Verfahrensstufe endet nach Schritt S16.

Wie vorstehend beschrieben, werden bei der zweiten Verfahrensstufe des Mehrheitsentscheidfilters 16 Messwerte unterschiedlicher Messsensoren für einen selben Messzeitpunkt ausgewählt und anhand der Abweichung von einem für die Auswahl ermittelten Lageparameters als normal oder anomal kategorisiert. Diese Verfahrensstufe hat den vorteilhaften Effekt, dass die Messwerte einzelner fehlerhafter Sensoren aus einer Mehrheit normaler Sensoren ausgesondert und im Weiteren unberücksichtigt bleiben können, wodurch die Zuverlässigkeit der Beurteilung des Betriebszustands der technischen Anlage erhöht wird. Der Rechen- und Auswerteaufwand wird ferner wegen der verringerten Datenmenge reduziert.

Im Folgenden wird der statistische Filter 18 aus Fig. 5 näher beschrieben. Dem statistischen Filter 18 werden vorbestimmte Parameter 8c und die Messwerte 7 bereitgestellt. Die vorbestimmten Parameter 8c umfassen die Parameter $w_b$, $k_b$, $w_f$ und $k_f$, die im Folgenden näher erläutert werden. Der statistische Filter 18 führt eine dritte Verfahrensstufe durch.

In der dritten Verfahrensstufe erfasst der statistische Filter 18 eine Messreihe mit Messwerten von einem selben Messsensor für eine selbe Messgröße zu unterschiedlichen Messzeitpunkten. Der Einfachheit halber werden im Folgenden die Schritte beschrieben, die in der dritten Verfahrensstufe mit den Messwerten einer erfassten Messreihe für einen Messsensor s ausgeführt werden, und die Notation $x_{s,t}$, die einen Messwert für den Sensor s zum Messzeitpunkt t bezeichnet, wird zu $x_t$, d.h. Messwert für den Messzeitpunkt t verkürzt. Es versteht sich, dass die dritte Verfahrensstufe wiederholt für weitere Messreihen mit den Messwerten jeweils unterschiedlicher Messsensoren und jeweils unterschiedlicher Messgrößen ausgeführt werden kann, so dass auch mit der dritten Verfahrensstufe die Gesamtheit aller Messwerte 7 erfasst werden kann.

Die erfasste Messreihe besteht aus n Messwerten für n unterschiedliche Messzeitpunkte. Im Folgenden werden die Schritte beschrieben, die gemäß der dritten Verfahrensstufe für einen Messwert $x_t$ für einen ausgewählten Messzeitpunkt t aus den n Messzeitpunkten ausgeführt werden. Es versteht sich, dass die nachfolgend beschriebenen Schritte gemäß der dritten Verfahrensstufe in einer Schleife t=1 bis n für einige oder alle der n Messwerte $x_t$ durchgeführt werden kann.

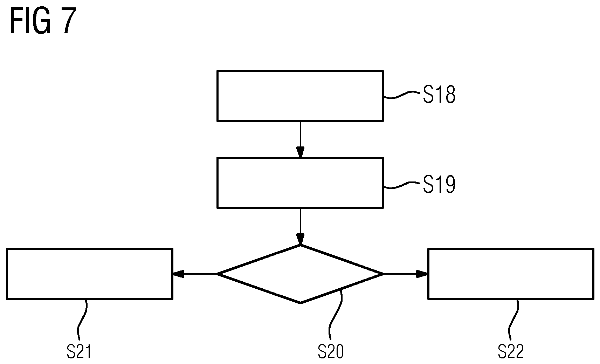

Fig. 7 zeigt die Schritte, die gemäß der dritten Verfahrensstufe für einen Messwert ausgeführt werden.

In einem Schritt S18 gemäß der dritten Verfahrensstufe wird der Messwert $x_t$ mit statistischen Lageparametern für zwei sogenannte Fenster in Beziehung gesetzt. Ein Fenster bezeichnet gemäß dem vorliegenden Ausführungsbeispiel eine Auswahl zeitlich aufeinanderfolgender Messwerte. Die Messwerte in dem Fenster müssen jedoch nicht notwendigerweise nahtlos aufeinanderfolgen, es kann zum Beispiel auch nur jeder zweite oder jeder dritte Messwert ausgewählt werden. Zur Veranschaulichung ist ein erstes Fenster, auch vorangehendes Fenster genannt, eine Auswahl an Messwerten, die dem Messwert $x_t$ in der Messreihe mindestens teilweise zeitlich vorangehen, und ein zweites Fenster, auch nachfolgendes Fenster genannt, ist eine Auswahl an Messwerten, die dem Messwert $x_t$ in der Messreihe mindestens teilweise zeitlich nachfolgen. Die Fenster können den Messwert $x_t$ enthalten, vorzugsweise enthalten die Fenster den zu kategorisierenden Messwert $x_t$ jedoch nicht. Die Größe, das heißt die Anzahl der Messwerte in den beiden Fenstern, ist durch die vorbestimmten Parameter $w_b$, $w_f$ festgelegt und kann beispielsweise an eine vorgebbare Betriebssituation der technischen Anlage, von der die Messwerte abgerufen werden, angepasst werden. Es wird ein vorangehendes Fenster mit einer Anzahl $w_b$ von dem Messwert $x_t$ vorangehenden und ein nachfolgendes Fenster mit einer Anzahl $w_f$ von dem

Messwert $x_t$ nachfolgenden Messwerten ausgewählt.

In einem Schritt S19 der dritten Verfahrensstufe wird für jedes der beiden Fenster ein statistischer Lageparameter, der die Lage eines Mittelpunkts der Messwerte des Fensters bezeichnet, und ein statistischer Streuungsparameter, der die Streuungsbreite der Messwerte des Fensters bezeichnet, bestimmt. Jeder geeignete Lageparameter und jeder geeignete Streuungsparameter können dazu benutzt werden. Gemäß dem zweiten Ausführungsbeispiel wird zum Beispiel ein Mittelwert als Lageparameter und eine Standardabweichung als Streuungsparameter bestimmt. In einer Variante kann jedoch auch ein Medianwert als Lageparameter und eine mittlere absolute Abweichung als Streuungsparameter benutzt werden. In einer weiteren Variante kann ein Biweight-Mittelwert als Lageparameter und eine Biweight-Standardabweichung als Streuungsparameter benutzt werden. Für das vorangehende Fenster kann ein anderer Lageparameter und/oder ein anderer Streuungsparameter als für das nachfolgende Fenster bestimmt werden.

In einem Schritt S20 der dritten Verfahrensstufe wird jeweils für das vorangehende und das nachfolgende Zeitfenster die Abweichung des Messwerts $x_t$ von dem Mittelwert bestimmt, mit der Standardabweichung normiert und das Ergebnis mit einem vorbestimmten Vergleichswert k verglichen. Mit anderen Worten wird die Bedingung aus der folgenden Gleichung (4) ausgewertet:

$$\frac{|x_t - \bar{x}_b|}{\bar{s}_b} \geq k_b \quad \text{und} \quad \frac{|x_t - \bar{x}_f|}{\bar{s}_f} \geq k_f \qquad \text{Gleichung (4)}$$

mit:

$x_t$: Messwert für den Messzeitpunkt t
$\bar{x}_b$: Mittelwert der $w_b$ Messwerte des vorangehenden Fensters (Lageparameter $\mu_b$)
$\bar{s}_b$: Standardabweichung der $w_b$ Messwerte des vorangehenden Fensters (Streuungsparameter $\sigma_b$)
$\bar{x}_f$: Mittelwert der $w_f$ Messwerte des nachfolgenden Fensters (Lageparameter $\mu_f$)
$\bar{s}_f$: Standardabweichung der $w_f$ Messwerte des nachfolgenden Fensters (Streuungsparameter $\sigma_f$)
$k_b$: vorbestimmter erster Vergleichswert
$k_f$: vorbestimmter zweiter Vergleichswert

Die Parameter $w_b$, $k_b$, $w_f$ und $k_f$ sind in den dem statistischen Filter 18 bereitgestellten vorbestimmten Parametern 8c umfasst. Gemäß einer Variante des zweiten Ausführungsbeispiels ist $w_b$ = 50, $k_b$ = 3, $w_f$ = 25 und $k_f$ = 2.

Ist die Bedingung aus Gleichung (4) erfüllt, wird in Schritt S21 gemäß der dritten Verfahrensstufe der Messwert $x_t$ als anomaler Messwert dritter Art identifiziert. Andernfalls wird der Messwert $x_t$ in Schritt S22 als normaler Messwert identifiziert.

Nachdem die vorstehend beschriebenen Schritte der dritten Verfahrensstufe für alle Messzeitpunkte der Messreihe und für alle Messreihen der Messdaten 7 durchgeführt worden sind, werden die dabei als anomal identifizierten Messwerte als anomale Messwerte 11c bereitgestellt und die als normal identifizierten Werte werden als normale Messwerte 10 bereitgestellt. Die normalen Messwerte 10 können als Messwerte 7 einer weiteren Verfahrensstufe bereitgestellt werden oder als normale Messwerte 10 als Ausgabe der ACU bereitgestellt werden.

Wie vorstehend beschrieben, werden bei der dritten Verfahrensstufe des statistischen Filters 18 Messwerte eines selben Messsensors für unterschiedliche Messzeitpunkte anhand statistischer Parameter eines vorangehenden und eines nachfolgenden Fensters mit Messwerten desselben Messsensors auf Anomalien untersucht und als normal oder anomal kategorisiert. Diese Verfahrensstufe führt dazu, dass einzelne anomale Messwerte aus einer Mehrheit normaler Messwerte desselben Messsensors, sogenannte Ausreißer, ausgesondert und im Weiteren unberücksichtigt bleiben, wodurch die Zuverlässigkeit der Messwerte und damit Beurteilung des Betriebszustands der technischen Anlage erhöht wird. Neben Ausreißern können auch steile Transienten der gemessenen Messgröße dazu führen, dass sich ein Messwert wie ein Ausreißer stark von den zeitlich vorangehenden oder von den zeitlich nachfolgenden Messwerten unterscheidet. Vor einem einfachen Glättungsverfahren würden solche Transienten, deren Erfassung gewünscht ist, ebenfalls geglättet und ausgesondert. Da gemäß der dritten Verfahrensstufe jedoch statistische Parameter sowohl eines vorangehenden als auch eines nachfolgenden Fensters bestimmt und mit einer UND-Verknüpfung zur Identifizierung anomaler Messwerte benutzt werden, werden durch die dritte Verfahrensstufe nur echte Ausreißer ausgesondert, während stark veränderte Messwerte aufgrund von steilen Transienten als normale Messwerte kategorisiert werden können, wodurch die Zuverlässigkeit der Messwerte und damit Beurteilung des Betriebszustands der technischen Anlage weiter erhöht wird. Die Zuverlässigkeit der Messwerte führt auch zu einem zuverlässigeren Betrieb der jeweiligen Anlage.

Im Folgenden wird der Rauschfilter 20 aus Fig. 5 näher beschrieben. Dem Rauschfilter 20 werden vorbestimmte Parameter 8d und die Messwerte 7 bereitgestellt. Die vorbestimmten Parameter 8d umfassen die Parameter $w_b$, $k_{b,noise}$, $w_f$ und $k_{f,noise}$. Der Rauschfilter 20 führt eine vierte Verfahrensstufe durch. Die vierte Verfahrensstufe gleicht der dritten Verfahrensstufe des statistischen Filters 18. Gleiche Schritte werden daher nicht erneut beschrieben. Die vierte Verfahrensstufe unterscheidet sich von der dritten Verfahrensstufe dadurch, dass die vorbestimmten Parameter 8d statt des ersten und des zweiten Vergleichsparameters $k_b$, $k_f$ den dritten und den vierten vorbestimmten Vergleichsparameter $k_{b,noise}$, $k_{f,noise}$ umfassen. Diese Parameter werden in der vierten Verfahrensstufe auf die gleiche Weise wie die Vergleichsparameter $k_b$, $k_f$ in der dritten Verfahrensstufe benutzt. Sie unterscheiden sich dadurch, dass mindestens einer der Parameter $k_{b,noise}$, $k_{f,noise}$ kleiner als der entsprechende Parameter $k_b$,$k_f$ ist. Auf diese Weise können Messwerte, die nicht den Kriterien für einen Ausreißer gemäß der vierten Verfahrensstufe genügen, aber dennoch auffällig stark von den Lageparametern des vorausgehenden und des nachfolgenden Fensters abweichen, als Rauschen identifiziert werden.

Die vierte Verfahrensstufe des Rauschfilters 20 unterscheidet sich außerdem von der dritten Verfahrensstufe des statistischen Filters 18 darin, dass Messwerte, die als Rauschen identifiziert werden, nicht als anomale Messwerte 11c verknüpft bereitgestellt, sondern direkt verworfen werden. Als Ursache für Messwerte, die als Rauschen identifiziert werden, werden zum Beispiel physikalische Störeinflüsse vermutet, die nicht in einer Anomalie oder Fehlfunktion des Sensors begründet sind.

Die vierte Verfahrensstufe kann nach oder vor der dritten Verfahrensstufe, zumindest teilweise parallel mit der dritten Verfahrensstufe oder gleichzeitig mit der dritten Verfahrensstufe durchgeführt werden.

Im Folgenden wird die ACU 12 aus Figur 4 näher beschrieben. Der ACU 12 werden die von der ACU 12 anomalen Messwerte 11 verknüpft mit charakterisierenden Informationen bereitgestellt. Darüber hinaus kann, auch wenn dies in Figur 4 nicht gezeigt ist, die ACU 12 auch auf geeignete Weise auf die als normal kategorisierten Messwerte 10 und die rohen Messwerte 7 zugreifen. Die ACU 12 kann als separate Einheit implementiert sein. Die ACU 12 führt eine Anomalie-Klassifizierung durch, und liefert zum Beispiel als anomal kategorisierte Messwerte 13, die mit kennzeichnenden Informationen verknüpft sind.

Gemäß dem zweiten Ausführungsbeispiel ordnet die ACU 12 einem anomalen Messwert $x_{s,t}$ ein Kennzeichen zu, das angibt, dass der anomale Messwert Wert ein zeitlicher korrelierter Messwert ist (Kennzeichen über eine zeitliche Korrelation der Anomalie), wenn der zeitlich vorausgehende Messwert $x_{s,t-1}$ oder der zeitlich nachfolgende Messwert $x_{s,t+1}$ ebenfalls als anomaler Messwert kategorisiert wurde.

Gemäß dem zweiten Ausführungsbeispiel fügt die ACU 12 einem anomalen Messwert zweiter Art ein Kennzeichen hinzu, das angibt, dass der anomale Messwert eine "schwerwiegende Anomalie" ist (Kennzeichen über einen Schweregrad der Anomalie), wenn der anomale Messwert besonders weit von dem Lageparameter $\mu_v$ abweicht. Dies gilt als erfüllt, wenn für den anomalen Messwert $x_{i,t}$ bei der zweiten Verfahrensstufe der ADU 9 die Bedingung der folgenden Gleichung (5) bzw. (6) erfüllt ist:

$$\left|x_{i,t} - \mu_v(t)\right| > AD + \frac{\sigma_v(t)}{\sqrt{s_t}} \qquad \text{(Gleichung 5)}$$

$$\frac{\left|x_{i,t} - \mu_v(t)\right|}{\mu_v(t)} > RD + \frac{\frac{\sigma_v(t)}{\sqrt{s_t}}}{\mu_v(t)} \qquad \text{(Gleichung 6)}$$

mit $\sigma_v(t)$: Standardabweichung der als normal identifizierten Messwerte für den Messzeitpunkt t und st: Anzahl der als normal identifizierten Messwerte für den Messzeitpunkt t.

Gemäß dem zweiten Ausführungsbeispiel ermittelt die ACU 12 für einen anomalen Messwert dritter Art, ob der Messwert eine schwerwiegende Anomalie ist, indem sie die dritte Verfahrensstufe der ADU 9 mit einem vorbestimmten Parameter $k_{b,severe}$ und einem vorgegebenen Parameter $k_{f,severe}$ anstelle der vorbestimmten Parameter $k_b$, $k_f$ erneut durchführt, wobei $k_{b,severe} > k_b$ und $k_{f,severe} > k_f$. Gemäß einer Variante des zweiten Ausführungsbeispiels ist $k_{b,severe} = k_{f,severe} = 4$. Wird dabei der anomale Messwert dritter Art erneut als anomaler Messwert identifiziert, bedeutet dies, dass der anomale Messwert dritter Art besonders stark von den mit den Streuungsparametern normierten Lageparametern des vorausgehenden und nachfolgenden Fensters abweicht, und die ACU 12 ordnet einem solchen anomalen Messwert dritter Art ein Kennzeichen zu, das angibt, dass der Messwert eine schwerwiegende Anomalie ist (Kennzeichen über einen Schweregrad der Anomalie).

Gemäß dem zweiten Ausführungsbeispiel verknüpft die ACU 12 mit einem anomalen Messwert $x_{s,t}$ zweiter oder dritter Art ein Kennzeichen, das angibt, dass der anomale Messwert auf eine Anomalie einer Sensorenmehrheit zurückzuführen ist (Kennzeichen über ein mehrfaches Auftreten der Anomalie bei verschiedenen Messsensoren für denselben Messzeitpunkt), wenn aus der Gesamtheit der Messwerte $x_{i,t}$; i=1...m für den Zeitpunkt t weniger als drei Messwerte als normal kategorisiert wurden.

Gemäß einer Weiterbildung des zweiten Ausführungsbeispiels umfasst die von der ACU 12 bereitgestellte Anomalien-Klassifizierung außerdem eine sensorbezogene quantitative Zusammenfassung. Bei der sensorbezogenen quantitativen Zusammenfassung handelt es sich um eine Vielzahl von Zählern, die für jeden der m Messsensoren MS1 bis MSm angeben, wie viele Messwerte, oder alternativ wie viel Prozent der von dem Messsensor bereitgestellten Messwerte, jeweils als anomale Messwerte, als zeitlich korrelierte anomale Messwerte, als schwerwiegende anomale Messwerte, als anomale Messwerte aufgrund einer Anomalie einer Sensorenmehrheit und/oder als eine oder mehrere bestimmte Kombinationen davon kategorisiert wurden. Eine solche sensorbezogene quantitative Zusammenfassung erlaubt eine einfache grafische Visualisierung eines Sensorqualitätsschaubilds zum Beispiel als Balken- oder Tortendiagramm.

Gemäß einer Weiterbildung des zweiten Ausführungsbeispiels ist es auch denkbar, dass die sensorbezogene quantitative Zusammenfassung in einem weiteren Verfahrensschritt dazu benutzt wird, um Sensoren, bei denen einer oder mehrere der Zähler zu hohe Werte erreichen, als unzuverlässig zu erkennen und automatisch zu deaktivieren. Das Deaktivieren kann durch Nichtberücksichtigen der Messwerte der deaktivierten Sensoren bei den Verfahrensschritten des zweiten Ausführungsbeispiels oder durch Abschalten der betreffenden Sensoren erfolgen. Ein Messsensor, bei dem einer oder mehrere der Zähler einen zu hohen Wert erreicht, arbeitet möglicherweise nicht korrekt, so dass auch die nicht als anomal identifizierten Messwerte des Sensors nicht zuverlässig sein können. Somit kann durch Deaktivieren solcher Sensoren die Zuverlässigkeit der bereitgestellten normalen Messdaten 10 weiter verbesswert und die zu betrachtende Datenmenge reduziert werden. Durch Abschalten solcher Sensoren wird außerdem der Energieverbrauch durch die Gesamtheit der Messsensoren verringert.

Die ADU 9 und die ACU 12 und die von der ADU 9 umfassten Filter 14, 16, 18 und 20 können durch eine programmgesteuerte Einrichtung 4 implementiert sein, die ein Computerprogramm ausführt, das die Durchführung eines Verfahrens zum Bereitstellen von Messwerten gemäß dem zweiten Ausführungsbeispielspiel veranlasst, welches die Funktionen der ADU 9 und der ACU 12 und der von der ACU 9 implementierten Filter 14, 16, 18 und 20 realisiert.

Die Wirksamkeit des vorgeschlagenen Verfahrens zum Bereitstellen von Messwerten einer technischen Anlage gemäß dem zweiten Ausführungsbeispiel wurde von der Anmelderin anhand von Felddaten untersucht, die an einer Gasturbine gewonnen wurden.

In einem ersten Anwendungsfall waren sechs Thermoelemente MS1...MS6 als Messsensoren an der Brennerspitze in einer Gasturbine 2 angeordnet und lieferten Messreihen aus Messwerten der Temperatur $T_{s,t}$ (s: Sensornummer, t: Messzeitpunkt) hinter dem Brenner. Derartige Messwerte sind dazu vorgesehen, in einem Verfahren zum Betreiben des technischen Systems eine erfolgreiche Zündung der Gasturbine anhand des Temperaturanstiegs zu erkennen.

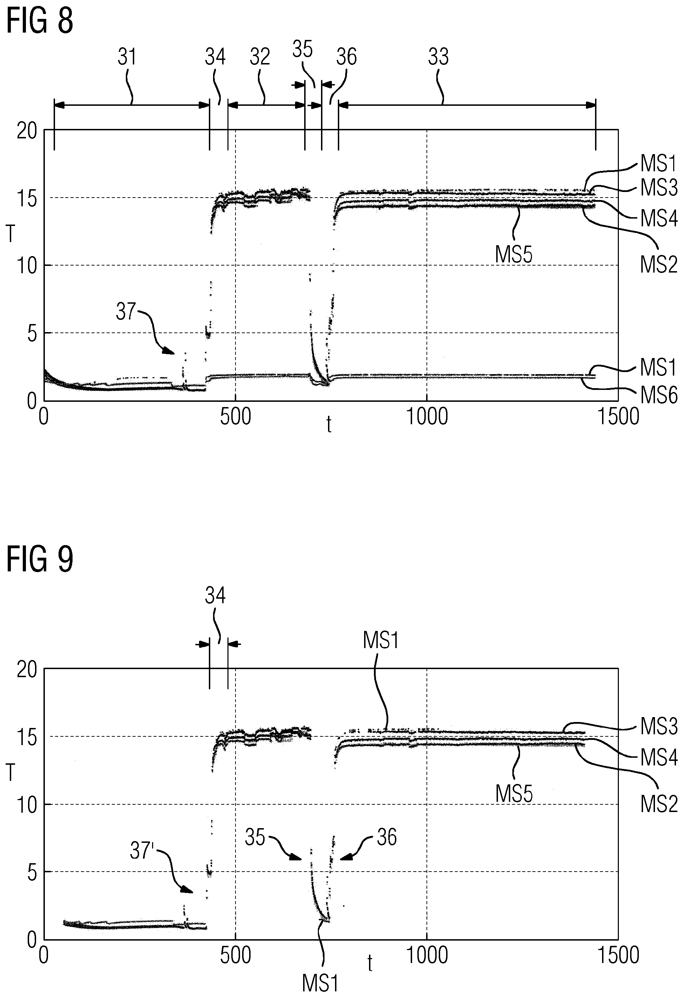

Fig. 8 zeigt eine Auftragung roher Messwerte der sechs Thermoelemente MS - MS6 über eine Zeitdauer von 1.500 Minuten. In Fig. 8 ist in horizontaler Richtung die Zeit t in Minuten und in vertikaler Richtung eine dimensionslose Temperatur T aufgetragen. Die Messdaten wurden in Abständen von 1 Minute bereitgestellt. In der Figur sind bei den Auftragungen der Messwerte der Sensoren MS2 bis MS5 drei stationäre Zustände 31, 32, 33 und drei steile Transienten in den Bereichen 34, 35, 36 zu erkennen. Die Messwerte des Sensors MS1 wechseln dort zwischen korrekten Werten (oberer gepunkteter Teil der Auftragung MS1) und offenkundig anomalen Werten (unterer Teil der Auftragung MS1). Die Messwerte des Sensors MS6 vollführen diesen Transienten gar nicht mit. Würde aus den Messwerten der sechs Sensoren MS1 - MS6 ein einfacher Mittelwert gebildet, würde dieser durch die Messwerte der Sensoren MS1 und MS6 erheblich verfälscht. Außerdem sind bei t = 450 (Bezugszeichen 37) kleinere Ausreißer zu erkennen.

Mit den in Fig. 8 dargestellten rohen Messwerten wurde ein Verfahren gemäß einem zweiten Ausführungsbeispiel der Erfindung durchgeführt. Der vorbestimmte Parameter AD für den Mehrheitsentscheidfilter 16 wurde dabei zu AD = 35 °C gewählt.

Fig. 9 zeigt eine Auftragung der von dem Verfahren bereitgestellten normalen, d.h. zuverlässigen Messwerte. Die unzuverlässigen Messwerte des Messsensors MS6 wurden von der zweiten Verfahrensstufe erfolgreich identifiziert und aus den normalen Messwerten entfernt. Von den Messdaten des Messsensors MS1 sind bei t = 800 bis 1500 einige zuverlässige Messwerte erhalten geblieben. Außerdem wurden von der dritten Verfahrensstufe die Ausreißer 37' geglättet, d.h. einige der Ausreißer 37 wurden entfernt. Die Transienten 34, 35 und 36 wurden korrekt als normal kategorisiert und sind demgemäß in Fig. 9 weiterhin deutlich zu erkennen.

In einem zweiten Anwendungsfall waren dreizehn Thermoelemente MS - MS13 als Messsensoren in dem geformten Abschnitt der Brennkammer einer Gasturbine 2 installiert und lieferten Messreihen aus Messwerten der Temperatur $T_{s,t}$ (s: Sensornummer, t: Messzeitpunkt). Derartige Messwerte werden verwendet, um in einem Verfahren zum Betreiben der Gasturbine eine Flammenzündung zu erkennen.

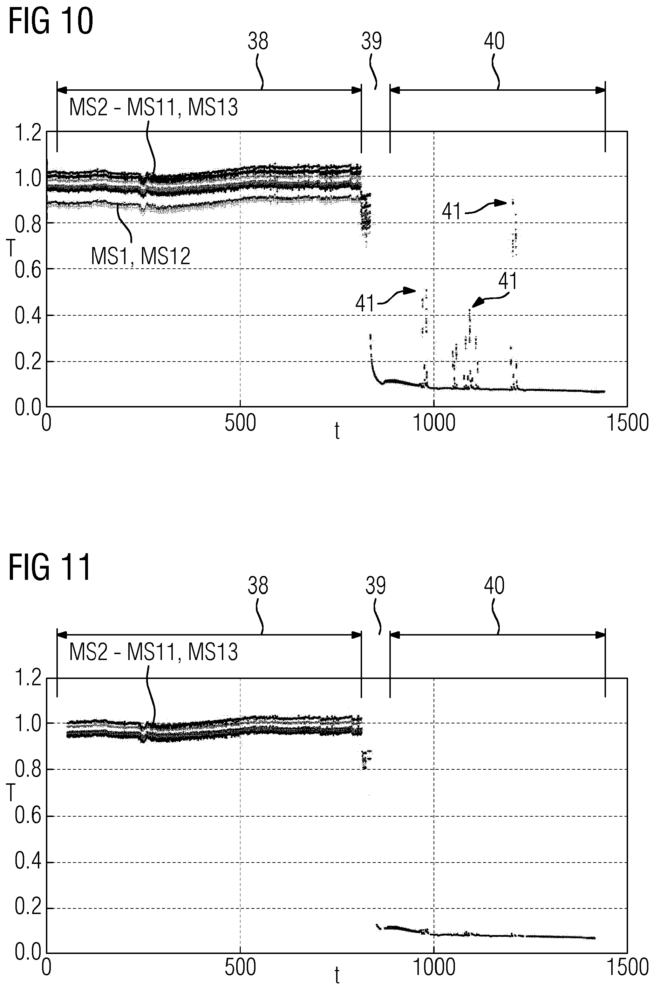

Fig. 10 zeigt eine Auftragung roher Messwerte der dreizehn Thermoelemente MS1 - MS13 über eine Zeitdauer von 1.500 Minuten. In Fig. 10 sind bei den Auftragungen der Messwerte der Sensoren MS1 bis MS13 zwei stationäre Zustände 38, 40 und eine steile Transiente 39 zu erkennen. In den Bereichen 41 sind visuell Ausreißer zu erkennen. Im Bereich des stationären Zustands 38 weichen die Auftragungen der Messwerte der Sensoren MS1 und MS12 erheblich von den Auftragungen der Messwerte der anderen Sensoren ab.

An den in Fig. 10 dargestellten rohen Messwerten wurde ein Verfahren gemäß einer Variante des zweiten Ausführungsbeispiels der Erfindung durchgeführt. Der vorbestimmte Parameter AD für den Mehrheitsentscheidfilter 16 wurde dabei zu AD = 35 °C gewählt. Für den statistischen Filter 18 wurde als statistischer Lageparameter $\mu_{f,b}$ ein Biweight-Mittelwert und als statistischer Streuungsparameter $\sigma_{f,b}$ eine Biweight-Standardabweichung benutzt. Die Parameter $k_b$ und $k_f$ wurden beide gleich zu $k_b = k_f = 3$ gewählt.

Fig. 11 zeigt eine Auftragung der von dem Verfahren bereitgestellten normalen, d.h. zuverlässigen Messwerte. Die unzuverlässigen Messdaten der Sensoren MS1 und MS12 wurden von der zweiten Verfahrensstufe erfolgreich identifiziert und aus den normalen Messwerten entfernt. Auch die starken Ausreißer 41 (Fig. 10) konnten von der dritten Verfahrensstufe nahezu vollständig als anomal kategorisiert und entfernt werden. Die Transiente 39 wurde dennoch korrekt als normal kategorisiert und ist demgemäß in Fig. 11 weiterhin deutlich zu erkennen. Dasselbe gilt für die stationären Bereiche 38 und 40.

Obwohl die vorliegende Erfindung anhand von Ausführungsbeispielen beschrieben wurde, ist sie vielfältig modifizierbar. Es können andere technische Anlagen als Gasturbinen gesteuert und betrieben werden. Ferner sind andere als die in den Beispielen genannten statistischen Parameter zur Beurteilung der Normalität oder Anomalie der Messwerte denkbar. Die vorgeschlagenen Maßnahmen führen insgesamt zu einer verbesserten Messwertqualität und damit zu einer zuverlässigen Anlagensteuerung. Man kann sagen, dass die Maßnahmen eine Filterung der Rohmessdaten zur Verbesserung der Messdaten insgesamt vollziehen. Ferner ermöglichen die besonders zuverlässigen und richtig bereitgestellten Messdaten oder Messwerte eine vereinfachte Auswertung von historischen Messdaten, um beispielsweise bestimmte pathologische Betriebszustände, wie Fehlerzustände oder kritische Betriebsmodi zu erkennen. Eine Steuerung oder Regelung des Betriebs der technischen Anlage wird somit erleichtert.

**Patentansprüche**

1. Verfahren zum Bereitstellen (S5) von Messwerten einer technischen Anlage (2) mittels einer programmgesteuerten Einrichtung zum Durchführen des Verfahrens, bei dem Messwerte (7) mindestens einer Messreihe erfasst (S1) werden, wobei ein jeweiliger Messwert von einem Messsensor (MS1-MSm) für eine jeweilige physikalische Messgröße in der technischen Anlage (2) für einen jeweiligen Messzeitpunkt bereitgestellt (S0) ist, und die Messwerte mit Hilfe eines Schwellwertvergleichs (S2) und mindestens einer weiteren Verfahrensstufe (S3) als normale Messwerte (10) oder anomale Messwerte (11) kategorisiert (S4) werden, **gekennzeichnet durch**:

   Durchführen des Schwellwertvergleichs (S2) als eine erste Verfahrensstufe (S2) mit den Schritten:

   Erfassen mindestens eines Messwerts der mindestens einen Messreihe,
   Vergleichen des mindestens einen Messwerts mit einem vorgegebenen Schwellwert (8a) zum Erzeugen eines Vergleichsergebnisses und
   Identifizieren des mindestens einen Messwerts als normaler Messwert oder als anomaler Messwert erster Art in Abhängigkeit von dem Vergleichsergebnis, und

   Durchführen einer zweiten und dritten Verfahrensstufe (S3), wobei die zweite Verfahrensstufe (S3) umfasst:

   Erfassen mehrerer ausgewählter Messwerte mehrerer Messreihen, wobei die mehreren ausgewählten Messwerte von unterschiedlichen Messsensoren (MS1-MSm) für eine selbe Messgröße und einen selben Messzeitpunkt bereitgestellt sind,
   Berechnen eines statistischen Lageparameters ($\mu_v$) der ausgewählten Messwerte,
   für mindestens einen der erfassten ausgewählten Messwerte:
   Vergleichen des mindestens einen Messwerts mit dem statistischen Lageparameter ($\mu_v$) und, falls der mindestens eine Messwert um mehr als eine vorgegebene relative (RD) oder absolute (AD) Abweichung (8b) von dem statistischen Lageparameter ($\mu_v$) abweicht, Identifizieren des mindestens einen Messwerts als anomaler Messwert zweiter Art,

   wobei die dritte Verfahrensstufe (S3) umfasst:

   Erfassen einer Messreihe mit Messwerten, wobei die Messwerte von einem Messsensor für eine selbe Messgröße und unterschiedliche Messzeitpunkte bereitgestellt sind und die Messwerte in der Messreihe zeitlich geordnet sind, und
   für mindestens einen der erfassten Messwerte der Messreihe:

   Bestimmen (S19) eines ersten statistischen Lageparameters ($\mu_b$) und eines ersten statistischen Streuungsparameters ($\sigma_b$) für eine erste vorgegebene Anzahl ($w_b$) von Messwerten derselben Messreihe, die dem mindestens einen Messwert der Messreihe zeitlich vorangehen,
   Bestimmen (S19) eines zweiten statistischen Lageparameters ($\mu_f$) und eines zweiten statistischen Streuungsparameters ($\sigma_f$) für eine zweite vorgegebene Anzahl ($w_f$) von Messwerten derselben Messreihe, die dem mindestens einen Messwert der Messreihe zeitlich nachfolgen,
Berechnen eines ersten Quotienten ($Q_b$) aus dem Betrag der Differenz zwischen dem mindestens einen Messwert und dem ersten statistischen Lageparameter ($\mu_b$) und dem ersten statistischen Streuungsparameter ($\sigma_b$),
Berechnen eines zweiten Quotienten ($Q_f$) aus dem Betrag der Differenz zwischen dem mindestens einen Messwert und dem zweiten statistischen Lageparameter ($\mu_f$) und dem zweiten statistischen Streuungsparameter ($\sigma_f$),
Identifizieren (S21, S22) des mindestens einen Messwerts als anomaler Messwert dritter Art, falls der erste Quotient ($Q_b$) größer oder gleich einem vorgegebenen ersten Vergleichswert ($k_b$) ist und der zweite Quotient ($Q_f$) größer oder gleich einem vorgegebenen zweiten Vergleichswert ($k_f$) ist, oder als normaler Messwert, falls der erste Quotient ($Q_b$) kleiner als der vorgegebene erste Vergleichswert ($k_b$) oder der zweite Quotient ($Q_f$) kleiner als der vorgegebene zweite Vergleichswert ($k_f$) ist,

wobei das Identifizieren eines Messwerts, der als anomaler Messwert identifiziert wird, ferner ein Speichern von klassifizierenden Informationen über einen Schweregrad einer Anomalie, über eine zeitliche Korrelation der Anomalie und/oder über ein mehrfaches Auftreten der Anomalie bei verschiedenen Messsensoren für denselben Messzeitpunkt umfasst.

2. Verfahren nach Anspruch 1, wobei

der statistische Lageparameter ($\mu_v$) ein Medianwert, ein Mittelwert oder ein Biweight-Mittelwert ist,
der erste statistische Lageparameter ($\mu_b$) und der zweite statistische Lageparameter ($\mu_f$) jeweils ein Mittelwert, ein Medianwert oder ein Biweight-Mittelwert ist und
der erste statistische Streuungsparameter ($\sigma_b$) und der zweite statistische Streuungsparameter ($\sigma_f$) jeweils eine Standardabweichung, eine mittlere absolute Abweichung oder eine Biweight-Standardabweichung ist.

3. Verfahren nach Anspruch 2 oder 3, wobei

die dritte Verfahrensstufe (S3) ferner umfasst:
Identifizieren eines jeweiligen Messwerts der Messreihe als Rauschen, wenn der erste Quotient ($Q_f$) größer oder gleich einem vorgegebenen dritten Vergleichswert ($k_{b,noise}$) ist und der zweite Quotient ($Q_b$) größer oder gleich einem vorgegebenen vierten Vergleichswert ($k_{f,noise}$) ist,
wobei der vorgegebene dritte Vergleichswert ($k_{b,noise}$) kleiner oder gleich dem vorgegebenen ersten Vergleichswert ($k_b$) und der vorgegebene vierte Vergleichswert ($k_{f,noise}$) kleiner oder gleich dem vorgegebenen zweiten Vergleichswert ($k_f$) ist.

4. Verfahren nach einem der Ansprüche 1 bis 3, wobei
das Identifizieren eines Messwerts ferner ein Verändern des Messwerts umfasst, sofern der Messwert nicht als normaler Messwert identifiziert wird.

5. Verfahren nach Anspruch 4, wobei
das Verändern eines Messwerts ein Versehen des Messwerts mit einem Kennzeichen und/oder ein Entfernen des Messwerts aus der Messreihe umfasst.

6. Verfahren nach einem der Ansprüche 1 bis 5, wobei die zweite Verfahrensstufe ferner umfasst:
wenn ein Messwert als anomaler Messwert zweiter Art identifiziert wird:

Entfernen des anomalen Messwerts zweiter Art aus den mehreren ausgewählten Messwerten und
Wiederholen der Schritte der zweiten Verfahrensstufe für die verbleibenden ausgewählten Messwerte, sofern mehr als zwei ausgewählte Messwerte verbleiben.

7. Verfahren nach einem der Ansprüche 1 bis 6, ferner umfassend:

Bestimmen der Anzahl der von einem ausgewählten Messsensor (MS1-MSm) bereitgestellten Messwerte und der Anzahl der anomalen Messwerte unter den von dem ausgewählten Messsensor (MS1-MSm) bereitgestellten Messwerten; und
Deaktivieren des ausgewählten Messsensors (MS1-MSm), wenn der Anteil der anomalen Messwerte an den von dem ausgewählten Messsensor (MS1-MSm) bereitgestellten Messwerten einen vorgegebenen Akzeptanzwert überschreitet.

8. Technisches System (1) umfassend eine technische Anlage (2), mindestens einen Messsensor (MS1-MSm) und eine programmgesteuerte Einrichtung (4), die zum Durchführen des Verfahrens nach einem der Ansprüche 1 bis 7 eingerichtet ist.

9. Technisches System nach Anspruch 8, wobei die technische Anlage (2) eine Gasturbine ist.

10. Technisches System nach Anspruch 8 oder 9, wobei der Messsensor (MS1-MSm) ein Temperatursensor, ein Drucksensor, ein Bewegungssensor oder ein Vibrationssensor ist.

11. Verfahren zum Betreiben eines technischen Systems (1) mit einer technischen Anlage (2), mindestens einem Messsensor (MS1-MSm) und einer programmgesteuerten Einrichtung (4), umfassend:

Durchführen des Verfahrens nach einem der Ansprüche 1 bis 7 mit Messwerten von dem mindestens einen Messsensor (MS1-MSm) für mindestens eine physikalische Messgröße in der technischen Anlage (2) mit der programmgesteuerten Einrichtung (4) und
Verändern eines Betriebsparameters der technischen Anlage (2) in Abhängigkeit der von dem Verfahren bereitgestellten Messwerte.

12. Verfahren nach Anspruch 11, wobei
das Verändern eines Betriebsparameters der technischen Anlage (2) ein Deaktivieren der technischen Anlage (2) zu Wartungszwecken umfasst.

13. Computerprogrammprodukt, das auf einer programmgesteuerten Einrichtung (4) die Durchführung eines Verfahrens nach einem der Ansprüche 1 bis 7, 11 und 12 veranlasst.

**Claims**

1. A method for providing (S5) measured values of a technical installation (2) by means of a programme-controlled apparatus for performing the method, wherein measured values (7) of at least one measurement row are detected (S1), wherein a respective measured value is provided by a measurement sensor (MS1-MSm) for a respective physical measurement variable in the technical installation (2) for a respective measurement time (S0), and the measured values are categorised (S4) as normal measured values (10) or anomal measured values (11) with the help of a threshold comparison (S2) and at least one further method step (S3), **characterised by**:

performing the threshold comparison (S2) as a first method step (S2) with the steps:

detecting at least one measured value of the at least one measurement row,
comparing the at least one measured value with a predetermined threshold (8a) for generating a comparison result, and
identifying the at least one measured value as a normal measured value or as an anomal measured value of a first type as a function of the comparison result, and

performing a second and a third method step (S3), wherein the second method step (S3) comprises:

detecting several selected measured values of several measurement rows, wherein the several selected measured values are provided by different measurement sensors (MS1-MSm) for a same measurement variable and a same measurement time,
calculating a statistical location parameter ($\mu_V$) of the selected measured values,
for at least one of the detected selected measured values:
comparing the at least one measured value with the statistical location parameter ($\mu_V$) and, if the at least one measured value deviates from the statistical location parameter ($\mu_V$) by more than a predetermined relative (RD) or absolute (AD) deviation (8b), identifying the at least one measured value as an anomal measured value of a second type, wherein the third method step (S3) comprises:

detecting a measurement row with measured values, wherein the measured values are provided by a measurement sensor for a same measurement variable and different measurement times and the measured values are arranged in time in the measurement row, and

for at least one of the detected measured values of the measurement row:

determining (S19) a first statistical location parameter ($\mu_b$) and a first statistical dispersion parameter ($\sigma_b$) for a first predetermined number ($w_b$) of measured values of the same measurement row which precede the at least one measured value of the measurement row in time,

determining (S19) a second statistical location parameter ($\mu_f$) and a second statistical dispersion parameter ($\sigma_f$) for a second predetermined number ($w_f$) of measured values of the same measurement row which follow the at least one measured value of the measurement row in time,

calculating a first quotient ($Q_b$) from the amount of the difference between the at least one measured value and the first statistical location parameter ($\mu_b$) and the first statistical dispersion parameter ($\sigma_b$),

calculating a second quotient ($Q_f$) from the amount of the difference between the at least one measured value and the second statistical location parameter ($Q_f$) and the second statistical dispersion parameter ($\sigma_f$),

identifying (S21, S22) the at least one measured value as an anormal measured value of a third type if the first quotient ($Q_b$) is larger than or equal to a predetermined first comparison value ($k_b$) and the second quotient ($Q_f$) is larger than or equal to a predetermined second comparison value ($k_f$), or as a normal measured value if the first quotient ($Q_b$) is smaller than the predetermined first comparison value ($k_b$) or the second quotient ($Q_f$) is smaller than the predetermined second comparison value ($k_f$),

wherein identifying a measured value which is identified as an anormal measured value further comprises storing classified information on a severity of an anomaly, on a temporal correlation of the anomaly and/or on multiple occurrences of the anomaly with different measurement sensors for the same measurement time.

2. The method according to claim 1, wherein

the statistical location parameter ($\mu_v$) is a median value, a middle value or a biweight middle value,

the first statistical location parameter ($\mu_b$) and the second statistical location parameter ($\mu_f$) each are a middle value, a median value or a biweight middle value, and

the first statistical dispersion parameter ($\sigma_b$) and the second statistical dispersion parameter ($\sigma_b$) each are a standard deviation, a mean absolute deviation or a biweight standard deviation.

3. The method according to claim 2 or 3, wherein

the third method step (S3) further comprises:

identifying a respective measured value of the measurement row as a noise when the first quotient ($Q_f$) is larger than or equal to a predetermined third comparison value ($k_{b,\ noise}$) and the second quotient ($Q_b$) is larger than or equal to a predetermined fourth comparison value ($k_{f,\ noise}$),

wherein the predetermined third comparison value ($k_{b,\ noise}$) is smaller than or equal to the predetermined first comparison value ($k_b$) and the predetermined fourth comparison value ($k_{f,\ noise}$) is smaller than or equal to the predetermined second comparison value ($k_f$).

4. The method according to any one of claims 1 to 3, wherein
identifying a measured value further comprises changing the measured value if the measured value is not identified as a normal measured value.

5. The method according to claim 4, wherein
changing a measured value comprises providing the measured value with an identifier and/or removing the measured value from the measurement row.

6. The method according to any one of claims 1 to 5, wherein the second method step further comprises:
when a measured value is identified as an anormal measured value of a second type:

removing the anormal measured value of a second type from the several selected measured values, and
repeating the steps of the second method step for the remaining selected measured values if more than two selected measured values remain.

7.   The method according to any one of claims 1 to 6, further comprising:

determining the number of the measured values provided by a selected measurement sensor (MS1-MSm) and the number of the anormal measured values from the measured values provided by the selected measurement sensor (MS1-MSm); and
deactivating the selected measurement sensor (MS1-MSm) when the proportion of the anormal measured values in the measured values provided by the selected measurement sensor (MS1-MSm) exceeds a predetermined acceptance value.

8.   A technical system (1), comprising a technical installation (2), at least one measurement sensor (MS1-MSm) and a programme-controlled apparatus (4) which is adapted to perform the method according to any one of claims 1 to 7.

9.   The technical system according to claim 8, wherein the technical installation (2) is a gas turbine.

10.  The technical system according to claim 8 or 9, wherein the measurement sensor (MS1-MSm) is a temperature sensor, a pressure sensor, a movement sensor or a vibration sensor.

11.  A method for operating a technical system (1) with a technical installation (2), at least one measurement sensor (MS1-MSm) and a programme-controlled apparatus (4), comprising:

performing the method according to any one of claims 1 to 7 with measured values by the at least one measurement sensor (MS1-MSm) for at least one physical measurement variable in the technical installation (2) with the programme-controlled apparatus (4), and
changing an operating parameter of the technical installation (2) as a function of the measured values provided by the method.

12.  The method according to claim 11, wherein
changing an operating parameter of the technical installation (2) comprises deactivating the technical installation (2) for maintenance purposes.

13.  A computer programme product which causes performance of a method according to any one of claims 1 to 7, 11 and 12 on a programme-controlled apparatus (4).

**Revendications**

1.   Procédé de fourniture (S5) de valeurs mesurées d'une installation technique (2) au moyen d'un dispositif commandé par programme pour la mise en œuvre du procédé, dans lequel des valeurs mesurées (7) d'au moins une série de mesures sont enregistrées (S1), une valeur mesurée respective étant fournie (S0) par un capteur de mesure (MS1-MSm) pour une grandeur de mesure physique respective dans l'installation technique (2) pendant une durée de mesure respective, et les valeurs mesurées étant catégorisées (S4) comme valeurs mesurées normales (10) ou anormales (11) à l'aide d'une comparaison de valeurs seuils (S2) et d'au moins une autre étape de procédé (S3), **caractérisé par** :

la réalisation de la comparaison de seuil (S2) comme première étape du procédé (S2) avec les étapes consistant à :

enregistrer au moins une valeur mesurée d'au moins une série de mesures,
comparer au moins une valeur mesurée avec une valeur seuil prédéterminée (8a) pour générer un résultat de comparaison et
identifier au moins une valeur mesurée comme une valeur mesurée normale ou comme une valeur mesurée anormale du premier type en fonction du résultat de la comparaison, et

la réalisation d'une deuxième et d'une troisième étape de procédé (S3), dans lequel la deuxième étape de procédé (S3) comprend :

l'enregistrement de plusieurs valeurs mesurées sélectionnées à partir de plusieurs séries de mesures, les différentes valeurs mesurées sélectionnées étant fournies par différents capteurs de mesure (MS1-MSm) pour la même quantité mesurée et le même temps de mesure,

le calcul d'un paramètre de position statistique ($\mu_v$) des valeurs mesurées sélectionnées,

pour au moins une des valeurs mesurées sélectionnées :

la comparaison de l'au moins une valeur mesurée au paramètre de position statistique ($\mu_v$) et, si l'au moins une valeur mesurée s'écarte du paramètre de position statistique ($\mu_v$) de plus d'un écart relatif (RD) ou absolu (AD) prédéterminé (8b), l'identification de l'au moins une valeur mesurée comme une valeur mesurée anormale du deuxième type,

la troisième étape du procédé (S3) comprenant :

l'enregistrement d'une série de valeurs mesurées, les valeurs mesurées étant fournies par un capteur de mesure pour la même quantité mesurée et à des moments de mesure différents et les valeurs mesurées de la série étant classées chronologiquement, et

pour au moins une des valeurs mesurées enregistrées de la série de mesures :

la détermination (S19) d'un premier paramètre de position statistique ($\mu_b$) et d'un premier paramètre de dispersion statistique ($\sigma_b$) pour un premier nombre prédéterminé ($w_b$) de valeurs mesurées de la même série de mesures qui précèdent l'au moins une valeur mesurée de la série de mesures,

la détermination (S19) d'un deuxième paramètre de position statistique ($\mu_f$) et d'un deuxième paramètre de dispersion statistique ($\sigma_f$) pour un deuxième nombre prédéterminé ($w_f$) de valeurs mesurées de la même série de mesures qui suivent au moins une valeur mesurée de la série de mesures dans le temps,

le calcul d'un premier quotient ($Q_b$) à partir de la quantité de la différence entre l'au moins une valeur mesurée et le premier paramètre de position statistique ($\mu_b$) et le premier paramètre de dispersion statistique ($\sigma_b$),

le calcul d'un deuxième quotient ($Q_f$) à partir de la quantité de la différence entre l'au moins une valeur mesurée et le deuxième paramètre de position statistique ($\mu_f$) et le deuxième paramètre de dispersion statistique ($\sigma_f$),

l'identification (S21, S22) de l'au moins une valeur mesurée comme une valeur mesurée anormale du troisième type si le premier quotient ($Q_b$) est supérieur ou égal à une première valeur de comparaison prédéterminée ($k_b$) et le deuxième quotient ($Q_f$) est supérieur ou égal à une deuxième valeur de comparaison prédéterminée ($k_f$), ou comme une valeur mesurée normale si le premier quotient ($Q_b$) est inférieur à la première valeur de comparaison prédéterminée ($k_b$) ou le deuxième quotient ($Q_f$) est inférieur à la deuxième valeur de comparaison prédéterminée ($k_f$),

dans lequel l'identification d'une valeur mesurée identifiée comme une valeur mesurée anormale comprend en outre le stockage d'informations de classification sur la gravité d'une anomalie, sur une corrélation temporelle de l'anomalie et/ou sur une occurrence multiple de l'anomalie sur différents capteurs de mesure pour le même temps de mesure.

2. Procédé selon la revendication 1, dans lequel

le paramètre de localisation statistique ($\mu_v$) est une médiane, une moyenne ou une moyenne bipondérée,
le premier paramètre de localisation statistique ($\mu_b$) et le deuxième paramètre de localisation statistique ($\mu_f$) sont chacun une moyenne, une médiane ou une moyenne bipondérée et
le premier paramètre de dispersion statistique ($\sigma_b$) et le deuxième paramètre de dispersion statistique ($\sigma_b$) sont chacun un écart type, un écart absolu moyen ou un écart type bipondéré.

3. Procédé selon la revendication 2 ou 3, dans lequel la troisième étape du procédé (S3) comprend en outre :
l'identification d'une valeur mesurée respective de la série de mesures comme noise si le premier quotient ($Q_f$) est supérieur ou égal à une troisième valeur de comparaison prédéterminée ($k_b$, noise) et le deuxième quotient ($Q_b$) est supérieur ou égal à une quatrième valeur de comparaison prédéterminée ($k_f$, noise),
dans lequel la troisième valeur de comparaison prédéterminée ($k_b$, noise) est inférieure ou égale à la première valeur de comparaison prédéterminée ($k_b$) et la quatrième valeur de comparaison prédéterminée ($k_f$, noise) est inférieure ou égale à la deuxième valeur de comparaison prédéterminée ($k_f$).

4. Procédé selon l'une quelconque des revendications 1 à 3, dans lequel
l'identification d'une valeur mesurée comprend en outre la modification de la valeur mesurée à moins que la valeur mesurée ne soit identifiée comme une valeur mesurée normale.

5. Procédé selon la revendication 4, dans lequel
la modification d'une valeur mesurée implique de marquer la valeur mesurée avec une étiquette et/ou de supprimer la valeur mesurée de la série de mesures.

6. Procédé selon l'une quelconque des revendications 1 à 5, dans lequel la deuxième étape du procédé comprend en outre :
si une valeur mesurée est identifiée comme une mesure anormale du deuxième type :

   la suppression de la valeur mesurée anormale du deuxième type parmi les multiples valeurs mesurées sélectionnées et
   la répétition des étapes de la deuxième étape du procédé pour les valeurs mesurées sélectionnées restantes s'il reste plus de deux valeurs mesurées sélectionnées.

7. Procédé selon l'une quelconque des revendications 1 à 6, comprenant en outre :

   la détermination du nombre de valeurs mesurées fournies par un capteur de mesure sélectionné (MSl-MSm) et du nombre de valeurs mesurées anormales parmi les valeurs mesurées fournies par le capteur de mesure sélectionné (MSl-MSm) ; et
   la désactivation du capteur de mesure sélectionné (MSl-MSm) si la proportion de valeurs mesurées anormales parmi les valeurs mesurées fournies par le capteur de mesure sélectionné (MSl-MSm) dépasse une valeur d'acceptation spécifiée.

8. Système technique (1) comprenant une installation technique (2), au moins un capteur de mesure (MSl-MSm) et un dispositif commandé par programme (4) qui est conçu pour mettre en œuvre le procédé selon l'une des revendications 1 à 7.

9. Système technique selon la revendication 8, dans lequel l'installation technique (2) est une turbine à gaz.

10. Système technique selon la revendication 8 ou 9, dans lequel le capteur de mesure (MSl-MSm) est un capteur de température, un capteur de pression, un capteur de mouvement ou un capteur de vibrations.

11. Procédé de fonctionnement d'un système technique (1) comprenant une installation technique (2), au moins un capteur de mesure (MSl-MSm) et un dispositif (4) commandé par programme, comprenant :

   la mise en œuvre du procédé selon l'une quelconque des revendications 1 à 7 avec des valeurs mesurées provenant d'au moins un capteur de mesure (MS1-MSm) pour au moins une grandeur physique mesurée dans le système technique (2) avec le dispositif commandé par programme (4) et
   la modification d'un paramètre de fonctionnement du système technique (2) en fonction des valeurs mesurées fournies par le procédé.

12. Procédé selon la revendication 11, dans lequel
la modification d'un paramètre de fonctionnement du système technique (2) comprend la désactivation du système technique (2) à des fins de maintenance.

13. Produit programme informatique permettant de mettre en œuvre un procédé selon l'une quelconque des revendications 1 à 7, 11 et 12 sur un dispositif commandé par programme (4).

FIG 1

MS1 ... MSm

2

3

4

1

6

5

EP 3 560 214 B1

FIG 2

$x_{1,1}$  $x_{1,2}$  $x_{1,n}$  $t$

$x_{2,1}$  $x_{2,2}$  $x_{2,n}$

$s$

$x_{m,1}$  $x_{m,2}$  $x_{m,n}$

FIG 3

FIG 4

FIG 5

# FIG 6

FIG 7

S18

S19

S21      S20      S22

FIG 8

FIG 9

FIG 10

FIG 11

**IN DER BESCHREIBUNG AUFGEFÜHRTE DOKUMENTE**

**In der Beschreibung aufgeführte Patentdokumente**

- US 2015233730 A1
- EP 2290371 A1
- EP 2351996 A1